Europäisches Patentamt

European Patent Office

Office européen des brevets

(19)

(11) **EP 1 190 834 A2**

(12) **EUROPEAN PATENT APPLICATION**

(43) Date of publication:
27.03.2002 Bulletin 2002/13

(51) Int Cl.$^7$: **B29C 47/16**, B29C 47/88

(21) Application number: 01122469.8

(22) Date of filing: 20.09.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 26.09.2000 JP 2000291641

(71) Applicant: **TORAY INDUSTRIES, INC.**
**Tokyo 103-8666 (JP)**

(72) Inventors:
• **Chigira, Nobutsugu**
**Otsu-shi, Shiga 520-0842 (JP)**

• **Nomura, Fumiyasu**
**Otsu-shi, Shiga 520-0867 (JP)**
• **Okashiro, Hidetoshi**
**Koka-gun, Shiga 528-0007 (JP)**
• **Sano, Takao**
**Moriyama-shi, Shiga 524-0045 (JP)**
• **Tooyama, Masaharu**
**Mishima-shi, Shizuoka 411-0033 (JP)**

(74) Representative: **Kador & Partner**
**Corneliusstrasse 15**
**80469 München (DE)**

(54) **Sheet manufacturing method and sheet manufacturing die**

(57)     An object of the present invention to provide a sheet manufacturing method and a sheet manufacturing die, in which a process of extruding a molten material from the die (4) and winding it around a cooling roller (5) can be performed at a high speed such as 60 m/min or more, and with which a sheet having a uniform thickness and a smooth surface can be obtained. In order to effectively charge the sheet with static electricity, the distance between paths (23,24) of product portion and end portions of the sheet from a die (4) to a cooling roller (5) is reduced by adjusting the temperature of the sheet at the end portions thereof. The die (4) is constructed such that the sheet is not influenced by deformation of a slit formed in the die (4), which is caused by heat expansion of the die (4) and adjustment operations.

FIG. 1A

EP 1 190 834 A2

**Description**

BACKGROUND OF THE INVENTION

1. Field of the Invention

The present invention relates to sheet manufacturing methods and sheet manufacturing dies.

2. Description of the Related Art

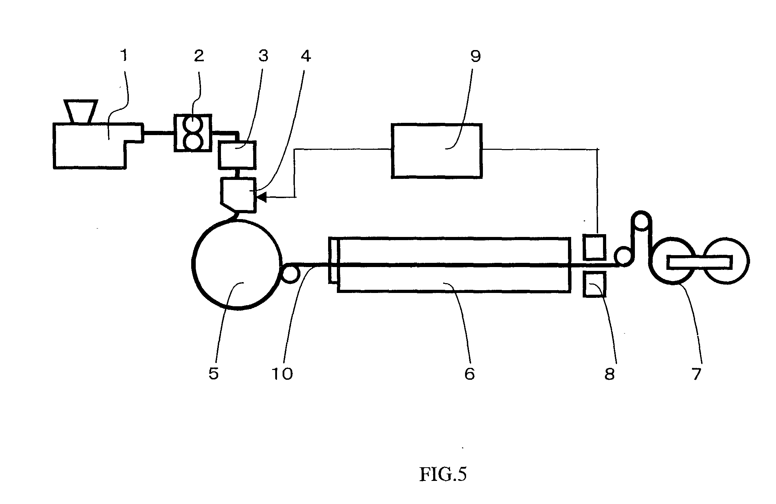

Conventionally, sheets formed of polyesters, polypropylenes, polyamides, polycarbonates, etc., are manufactured using an apparatus such as shown in Fig. 5.

With reference to Fig. 5, a molten material is first extruded by an extruder 1. Then, the throughput is held constant by a gear pump 2, and impurities are removed by a filter 3. Then, the molten material is spread by a die 4 in the width direction thereof, such that it is formed in the shape of a sheet 10. The width direction of the die 4 is perpendicular to the direction in which the sheet 10 is extruded from the die 4 (that is, the direction perpendicular to the page in Fig. 5), and is referred to merely as the "width direction" in the following descriptions. Then, the sheet 10 is cooled and solidified by a cooling roller 5, is drawn by a drawing machine 6, and is finally wound around a winder 7. The thickness distribution of the sheet 10 in the width direction is measured by a thickness gauge 8. In order to produce a sheet having a sufficiently high quality. The difference between the actual thickness distribution and the desired thickness, that is, the thickness variation, is calculated and fed back to the die 4, so that the thickness distribution can be made closer to the desired thickness distribution.

Dies for sheet manufacturing apparatuses are designed such that a sheet having uniform thickness in the width direction can be provided therewith. Polyester films, for example, have various industrial applications: they may be used as base films for magnetic storage medium, electrical insulators in capacitors, printer ribbons in office automation (OA) devices, etc., because of their excellent characteristics. In these applications, high dimensional accuracy is required with regard to thickness thereof. Accordingly, it is extremely important to reduce the thickness variation of the film. In the case in which resin sheets are manufactured, T dies and coat hanger dies are commonly used. With respect to the design of the dies, it is necessary to determine the shape of a flow passage for molten material such that the thickness of the sheet is made uniform, especially in the width direction thereof. The thickness distribution of the sheet in the width direction thereof can be controlled by changing the shape of a manifold portion, which spreads the molten material in the width direction, and by changing the shape of a slit at the tip of the die. If these shapes are appropriately determined, the thickness variation can be suppressed to 1%. The T dies are designed such that the manifold portion is enlarged so that the pressure loss at this part is reduced, and the throughput is determined by the shape of the slit at the tip. On the other hand, the coat hanger dies are designed such that the cross-section of the manifold portion is reduced so that the pressure loss is increased, and the molten material is spread in the width direction in the shape of a coat hanger. The pressure is balanced at a triangle-shaped slit formed at the midsection, so that the throughput is made uniform over the width. The coat hanger dies are commonly used since the time interval in which the molten material passes through there is short, and abnormal retention and/or degradation of the molten material can be prevented. The designs as described above enable the thickness variation can be suppressed to 1%.

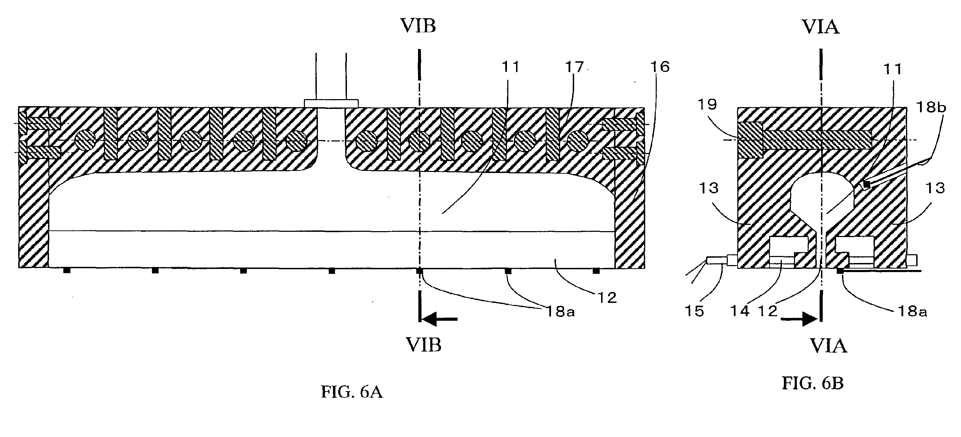

Fig. 6 shows a structure of a typical die. With respect to Fig. 6, the die includes a manifold portion 11, which spreads the molten material in the width direction, and a tip portion, which includes a pair of lips 13 which forms a narrow slit 12 between there. Since the thickness distribution of the sheet in the width direction is determined based on the shape and the temperature of the slit 12, the tip portion is often used for adjusting the thickness of the sheet. The shape of the slit is adjusted by, for example, moving the lips 13 by turning adjustment bolts 14, which are arranged in the lips 13 along the width of the die. Alternatively, the adjustment bolts 14 may be provided with cartridge heaters or sleeve-type heaters, and the shape of the slit may be changed by utilizing the heat extension and contraction of the adjustment bolts 14. When the shape of the slit is appropriately determined, the thickness variation can be suppressed to 1%. The overall body of the die is generally heated using a plurality of cartridge heaters 17 which is inserted in the die along the width thereof. Thermocouples 18a are disposed at positions close to the lips 13, and thermocouples 18b are disposed in holes formed in the die at positions close to the manifold portion 11. The die is constructed by fixing the lips 13 to each other with fixing bolts 19, which are uniformly screwed in the die in the width direction.

Accordingly, the sheet manufacturing process is performed with an aim of, for example, obtaining a resin sheet of which the thickness variation is within 1%. However, in actually, when a molten resin is extruded, the thickness variation of the sheet obtained in the width direction thereof is often measured to be from 10 to 30%.

One of the reasons for this is that the slit between the lips widens due to the inner pressure of the molten resin. A die designed in consideration of this problem is. disclosed in Japanese Patent Publication No. 2598617. In a typical coat hanger die, the vertical position of the top surface of the manifold portion, which is the surface closer to the inlet of the molten resin, relative to the outlet of the molten resin at the tip is reduced from the center toward the ends. Accordingly, the vertical positions at which fixing bolts are disposed also becomes lower toward the ends. In contrast, according to a technique disclosed in the above-described patent, the vertical position of the top surface of the manifold portion is made substantially constant in the width direction, and the fixing bolts of the lips are arranged along the width at the same height. Accordingly, the influence due to the inner pressure can be reduced.

However, according to the observations performed by the inventors of the present invention, when molten polyester is extruded at a rate of 1000 kg/hr from a coat hanger die which is designed as above-described, the pressure inside the die greatly increases. Thus, although the slit size of the die is easily made uniform over the width, the gap between the lips increases easily at the triangle-shaped slit, which is provided in order to balance the pressure and make the throughput uniform over the width, and which is important in the design of coat hanger dies. Thus, the pressure balance determined in the design phase is changed and the uniformity of the throughput is degraded, so that the thickness variation of the sheet is easily increased.

On the other hand, with respect to T dies, a similar approach has not been applied thereto.

Another reason why the thickness variation of the sheet is increased is the thermal deformation of dies.

As a conventional heating method, such a method as disclosed in Japanese Unexamined Patent Application Publication No. 9-277343 is known in which cartridge heaters are inserted inside a die in the direction from a die hopper toward a tip of the die, or in the width direction of the die, in order to make the temperature in the width direction uniform.

However, the method disclosed in the Japanese Unexamined Patent Application Publication No. 9-277343 has the following problem; when the cartridge heaters are inserted as described above, heat is conducted in the radial direction thereof and the temperature distribution is made such that the temperature is radially reduced from the centers of the cartridge heaters. Accordingly, the thermal expansion of the die occurs in accordance with such a temperature distribution, and nonuniform deformation of the die occurs. Although the temperature can be made uniform along the width when the cartridge heaters are inserted along the width of the die, the temperature varies from the die hopper toward the tip. Since the die is restrained at positions at which the fixing bolts are disposed, etc., non uniform deformation also occurs in this case. Accordingly, the thickness variation increases in either case.

In addition, in the case in which a molten resin extruded from the die is solidified by a cooling roller and is then subjected to a biaxial drawing process in the longitudinal and lateral directions, the thickness variation increases by various reasons. For example, the thickness variation may increase due to nonuniform cooling by the cooling roller, nonuniform temperature distribution and nonuniform rotation of a roller used in the longitudinal drawing process, nonuniform temperature distribution and nonuniform air velocity in a tenter in the lateral drawing process, etc. An adjustment for reducing the thickness variation, which is generated and made complex by the above-described various reasons, is often performed by using a thickness adjustment mechanism provided in the die. In such a case, the adjustment mechanism of the die receives too much stress and permanent deformation of the die often occurs.

Due to the various reasons as described above, the thickness variation tends to be large in the initial stage of the ejection process. Although the thickness distribution is measured by a thickness gauge and is adjusted by the thickness adjustment mechanism of the die based on the results of the measurement, it takes a long time before a sheet having a sufficiently small thickness variation can be obtained. When a high degree of thickness accuracy is required or when a sheet having a large thickness such as 100 μm is manufactured, a sheet having sufficient thickness accuracy may not be obtained even after 24 hours of adjustment.

Thus, there is a problem in that material costs and expenses incurred during that time are wasted and the production capacity is reduced. In addition, there is also a problem in that, since the thickness of the sheet is different from the designed value, the central value in adjustment range is often shifted by a large amount. Furthermore, there is also a problem in that the adjustment mechanism of the die receives too much stress when it is used for reducing the thickness variation generated in the following processes and so permanent deformation of the die may occur. When the permanent deformation of the die occurs, the shape of the flow passage is changed from the shape determined in the design phase, and the slit size cannot be adjusted accurately and the desired thickness distribution cannot be obtained.

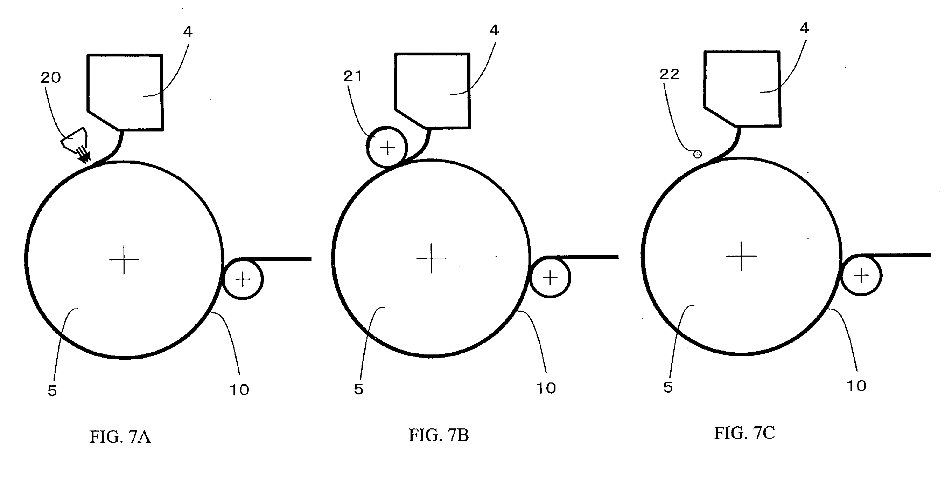

In addition, the smoothness of the sheet (thickness variation) is determined not only by the die but also by the adhesion force between the sheet in a molten state and the cooling roller. The surface roughness of the cooling roller is such that its maximum height Ry is 0.5 μm, and the surface roughness of the sheet can be made closer to that of the cooling roller if the sheet in a molten state comes into close contact with the cooling roller. However, when the adhesion force is weak, the amount of air which flows between the sheet and the cooling roller increases, and small holes formed when air is trapped therein are generated. Thus, in order to increase the smoothness of the sheet, the adhesion force between the sheet in a molten state and the cooling roller must be increased while the sheet is wound there around. Figs. 7A to 7C illustrate typical methods for increasing the adhesion force between the sheet in a molten state and the cooling roller. Fig. 7A shows a method in which the adhesion force is increased by blowing air toward the molten material at the position where it lands on the cooling roller, and Fig. 7B shows a method in which the adhesion force is increased using a nip roller 21. However, the method shown in Fig. 7C is most commonly used. With reference to Fig. 7C, an electrode 22, to which a high voltage is applied, is disposed at a position near the position where the sheet in a molten state lands on the cooling roller. The sheet is charged with static electricity by the electric discharge from the electrode 22, and the adhesion force is increased due to the electrostatic adhesion force applied between the sheet and the cooling roller. This method is hereinafter referred to as an "electrostatic charging method".

One of the reasons why the electrostatic charging method is most commonly used is that the adhesion force between the sheet and the cooling roller can be made more uniform over the width compared to the method in which air is blown toward the sheet, etc. In addition, the generation of holes, which is one of the problems encountered when the method using the nip roller, can be prevented. Furthermore, the size of the device can be reduced and the device can be easily handled.

In the electrostatic charging method, the electrostatic charging of the sheet is performed by discharging electricity from the electrode 22, and the adhesion force is increased along with the amount of electrostatic charge Q. The electrostatic charge Q is proportional to the intensity of the electric field E around the electrode 22, and the intensity of the electric field E at the position away from the electrode 22 by a distance L is inversely proportional to the distance L. More specifically, the relationship between Q, E, and L can be expressed as $Q \propto E \propto (1/L)$. Thus, as the electrode 22 is disposed closer to the sheet, the electrostatic charge Q of the sheet is increased and the adhesion force between the sheet and the cooling roller are also increased. Accordingly, even when the rotational speed of the cooling roller is increased, the generation of holes, which is formed when air is trapped, can be prevented and a sheet having smooth surface can be obtained.

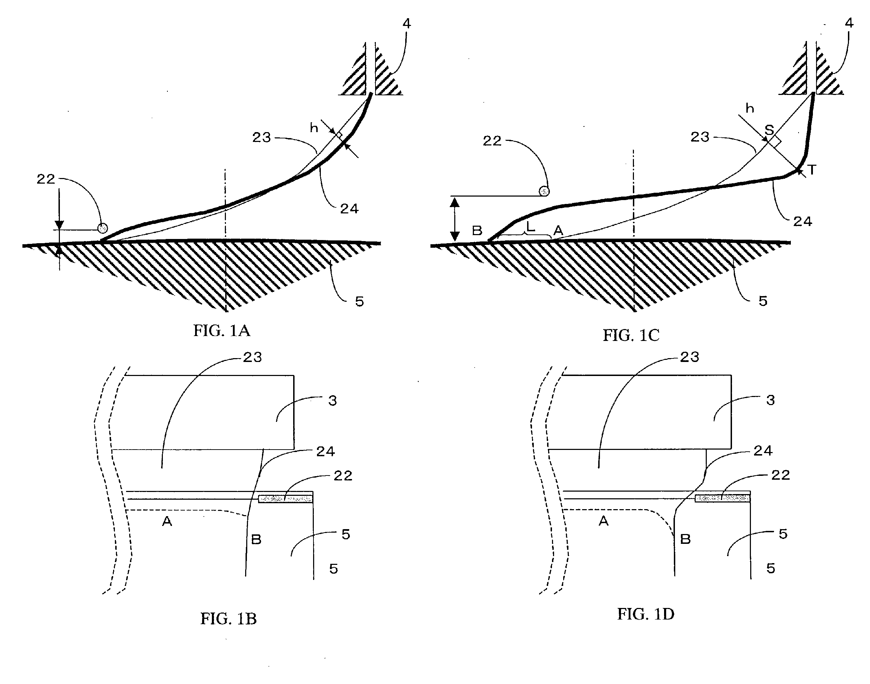

However, in the conventional technique using the electrostatic charging method, there is a subsequent problem in the operation of disposing the electrode at a position close to the sheet. That is, since a product portion of the sheet, which is a portion of the sheet used at a product, and the end portions of the sheet move from the die to the cooling roller along different paths, the sheet cannot be charged with a sufficient amount of static electricity. This will be further explained with reference to Figs. 1C and 1D. Fig. 1C is a schematic diagram which shows the paths of the product portion and the end portions of the sheet in the plane perpendicular to the width direction of the sheet, and Fig. 1D is a schematic diagram which shows the die, the cooling roller, and movement of an end portion of the sheet. When the thickness of the end portion of the sheet is larger than that of the product portion of the sheet, a path 24 of the end portions first extends below a path 23 of the product portion after the sheet is extruded from the die 4. Then, the end portions suddenly receive tension by being wound by the cooling roller 5 and neck down in the width direction occurs. At this time, the end portion of the sheet is raised so that the path 24 of the end portions of the sheet becomes higher than the part 23 of the product portion. Accordingly, the end portions and the product portion of the sheet land on the cooling roller at different positions. In such a case, when the electrode 22 is disposed at the optimal position for the product portion, the end portions of the sheet are too close to the electrode 22 and the spark discharge occurs between the electrode 22 and the sheet. Thus, the sheet is damaged. In addition, when the electrode 22 is disposed at a position relatively far from the sheet in order to prevent spark discharge, the product portion of the sheet cannot be charged with a sufficient static electricity. Furthermore, since landing points A and B, at which the end portions and the product portion land on the cooling roller, are different, the amount of electrostatic charge is not uniform over the width. Thus, there is a problem in that sufficient adhesion force cannot be applied between the end portions of the sheet and the cooling roller, and the winding speed of the sheet cannot be increased.

In order to solve the above-described problems, a technique as described below is disclosed in Japanese Unexamined Patent Application Publication No. 59-106935. According to the above-described publication, the rise of the end portions of the sheet is evaluated based on parameters P obtained from values regarding the movement of the sheet between the die and the cooling roller (length of the sheet between the die and the cooling roller, the amount of neck down in the width direction of the sheet, etc.). In addition, according to this publication, the electrode can be disposed closer to the sheet by optimizing the parameters P and reducing the amount of rising of the end portions of the sheet, so that the winding speed the sheet can be increased to 40 m/min or more. According to an example described in this publication, a winding speed of 60 m/min is realized. However, according to verification experiments performed by the inventors of the present invention, even when the parameters P are optimized, air cannot be fully excluded from the area between the sheet and the cooling roller and an acceptable sheet cannot be obtained if the winding speed is increased to 62 m/min or more.

In addition, a specific method for optimizing the parameters P is not suggested in the Japanese Unexamined Patent Application Publication No. 59-106935, and this technique is not realizable and concrete as a manufacturing method. Accordingly, the rise of the end portion of the sheet cannot be prevented by the technique disclosed in the Japanese Unexamined Patent Application Publication No. 59-106935.

According to the research performed by the inventors of the present invention, the above-described problems of the conventional technique do not occur in the manufacturing process of every sheet, but frequently occurs when the difference between the thickness of the end portion and the product portion are large. In the sheet manufacturing industry, reductions in the thickness of sheets are constantly being required. However, the thickness of the end portions of the sheet cannot be reduced in order to prevent the meandering of the sheet while the sheet is being drawn in the longitudinal direction in a sequential biaxial drawing process. In addition, another reason why the end portions of the sheet cannot be reduced is that the end portions of the sheet must be clipped in the lateral drawing process (this concerns both the sequential and simultaneous biaxial drawing process). When the difference between the thickness of the product portion and the end portions is increased, the end portions of the sheet move approximately vertically toward the cooling roller due to the weight thereof. Thus, the gap between the paths of the product portion and the end portions in the vertical direction and the distance between the landing points of the product portion and the end portions are increased. By repeating experiments, the inventors of the present invention have discovered that when the thickness of the end portions is twice or greater than that of the product portion, the above-described problem becomes critical.

Accordingly, even when the technique disclosed in the Japanese Unexamined Patent Application Publication No. 59-106935 is applied, a sheet having acceptable smoothness cannot be obtained when the winding speed of the sheet exceeds 60 m/min.

SUMMARY OF THE INVENTION

Accordingly, it is an object of the present invention to provide a sheet manufacturing method and a sheet manufacturing die, in which a process of extruding a molten material from the die and winding it around a cooling roller can be performed at a high speed such as 60 m/min or more, and with which a sheet having a uniform thickness and a smooth surface can be obtained. More specifically, an object of the present invention is to provide optimal conditions of the relationship between the paths of the product portion and the end portions from the die to the cooling roller and the position of the electrode. In addition, it is also an object of the present invention to provide a sheet manufacturing method and a sheet manufacturing die in which, even when the operation for realizing the optimal conditions is performed, and even when the operation of reducing the thickness variation, which is generated in the processes following the ejection process, is performed by the adjustment mechanism of the die, permanent deformation of the die and the adjustment mechanism does not easily occur. Furthermore, it is also an object of the present invention to provide a sheet manufacturing method and a sheet manufacturing die, in which, even the die is heated from room temperature to the temperature of the molten material, the molten material can be extruded as determined in the design phase.

The present invention has been obtained from the results of thorough investigations performed by the inventors of the present invention in order to solve the above-described problems.

According to one aspect of the present invention, a sheet manufacturing method for a sheet includes the steps of extruding a molten material from a slit formed in a die in the form of a sheet; and solidifying the sheet by bringing the sheet into contact with a roller. In the extruding step, the sheet is formed such that the end portions thereof in the width direction are 2 to 80 times thicker than the middle portion thereof. In addition, the variation in paths along which different parts of the molten material move from the die to the roller in the width direction is 15 mm or less. The variation in paths represents the degree of difference between paths along which different parts of the sheet move in a plane perpendicular to the width direction thereof, and is defined by the maximum difference between the paths of the product portion and the end portions.

In addition, according to another aspect of the present invention, a sheet manufacturing die includes a slit from which a molten material is extruded in the form of a sheet; a heating unit which heats the molten material at least the middle portion the slit; and a heating unit which adjusts the temperature of the molten material at the end portions of the slit independently of the temperature thereof at the middle portion of the slit. The heating unit may include a flow passage which transfers a fluid used for heat exchange inside the die. The flow passage for transferring the fluid for heat exchange may be formed, for example, in side plates which seal the molten material at the end portions and/or the positions close to the end portions of the die in the width direction. In such a case, and the temperature of the molten material at the end portions of the slit may be adjusted by utilizing the heat exchange with the fluid.

The present invention will be further described in the following detailed description of the invention with reference to the accompanying drawings.

BRIEF DESCRIPTION OF THE DRAWINGS

Figs. 1A and 1B are schematic diagrams showing a state of a sheet according to the present invention, and Figs. 1C and 1C are schematic diagrams showing a state of a sheet according to a conventional technique;
Fig. 2 is a schematic diagram of a sheet manufacturing apparatus according to the present invention;
Fig. 3 is a schematic diagram of a sheet manufacturing apparatus according to the present invention;
Figs. 4A and 4B are schematic diagrams of a sheet manufacturing die according to the present invention, wherein Fig. 4A is a sectional view of Fig. 4B cut along line IVA-IVA and Fig. 4B is a sectional view of Fig. 4A cut along line IVB-IVB;

Fig. 5 is a schematic diagram of a typical sheet manufacturing apparatus;

Figs. 6A and 6B are schematic diagrams of a typical sheet manufacturing die, wherein Fig. 6A is a sectional view of Fig. 6B cut along line VIA-VIA and Fig. 6B is a sectional view of Fig. 6A cut along line VIB-VIB;

Figs. 7A to 7C are schematic diagrams which show typical processes for cooling a sheet;

Fig. 8 is a schematic diagram of a sheet manufacturing apparatus according to the present invention;

Fig. 9 is a schematic diagram of a die according to the present invention;

Fig. 10 is a schematic sectional view of Fig. 9 cut along line X-X;

Fig. 11 is a schematic outside view of Fig. 9;

Fig. 12 is a schematic outside view of Fig. 10;

Fig. 13 is a schematic diagram of a conventional die;

Fig. 14 is a schematic sectional view of Fig. 13 cut along line XIV-XIV;

Fig. 15 is a schematic outside view of Fig. 13;

Fig. 16 is a schematic outside view of Fig. 14;

Fig. 17 is a schematic diagram of an apparatus for heating a die according to the present invention;

Fig. 18 is a schematic diagram of the heating apparatus shown in Fig. 17;

Fig. 19 is a schematic diagram of a die according to the present invention;

Fig. 20 is a schematic sectional view of Fig. 19 cut along line XX-XX;

Fig. 21 is a schematic sectional view of Fig. 20 cut along line XXI-XXI;

Fig. 22 is a schematic diagram of a die according to the present invention;

Fig. 23 is a schematic sectional view of Fig. 22 cut along line XXIII-XXIII;

Fig. 24 is a schematic outside view of Fig. 22;

Fig. 25 is a schematic outside view of Fig. 23;

Fig. 26 is a schematic diagram of a side plate of a die according to the present invention;

Fig. 27 is a schematic diagram of a side plate of a die according to the present invention;

Fig. 28 is a schematic diagram of a die according to the present invention;

Fig. 29 is a schematic sectional view of Fig. 28 cut along line XXIX-XXIX;

Fig. 30 is a schematic sectional view of Fig. 29 cut along line XXX-XXX;

Fig. 31 is a schematic diagram showing a frictional force;

Figs. 32A to 32C are schematic diagrams showing constructions of heaters according to the present invention;

Figs. 33A to 33C are schematic diagrams showing a method for measuring the thickness of a die according to the present invention;

Fig. 34 is a schematic diagram showing a construction of heaters according to the present invention;

Fig. 35 is a schematic diagram showing a construction of heaters according to the present invention;

Figs. 36A and 36B are schematic diagrams showing a method for measuring the temperature of a die according to the present invention, wherein Fig. 36B is a sectional view of Fig. 36A cut along line XXXVIB-XXXVIB;

Fig. 37 is a graph which shows the temperature distribution of a first lip of a die according to the present invention in the width direction thereof;

Fig. 38 is a graph which shows the temperature distribution of a second lip of a die according to the present invention in the width direction thereof;

Fig. 39 is a graph which shows the temperature distribution of a first lip of a typical die in the width direction thereof;

Fig. 40 is a graph which shows the temperature distribution of a second lip of a typical die in the width direction thereof;

Fig. 41 is a schematic diagram showing the thickness distribution of a sheet formed by a die according to the present invention before a drawing process;

Fig. 42 is a schematic diagram showing the thickness distribution of the sheet formed by the die according to the present invention after the drawing process;

Fig. 43 is a schematic diagram showing the thickness distribution of a sheet formed by a typical die before a drawing process;

Fig. 44 is a schematic diagram showing the thickness distribution of a sheet formed by a typical die after the drawing process;

Fig. 45 is a schematic diagram showing the thickness distribution of a sheet formed by a die according to the present invention before a drawing process;

Fig. 46 a schematic diagram showing the thickness distribution of the sheet formed by the die according to the present invention after the drawing process;

Fig. 47 is a schematic diagram showing the thickness distribution of a sheet formed by a typical die before a drawing process;

Fig. 48 is a schematic diagram showing the thickness distribution of a sheet formed by a typical die after the drawing process; and

Fig. 49 is a schematic diagram showing a state of a molten material according to the present invention.

DETAILED DESCRIPTION OF THE INVENTION

The present invention will be further illustrated below with reference to the accompanying drawings.

According to the present invention, a sheet manufacturing method includes the steps of extruding a molten material from a slit formed in the tip of a die in the form of a sheet; and solidifying the sheet by bringing the sheet into contact with a cooling roller, and the temperature of the molten material at the end portions of the slit is adjusted independently of the temperature thereof at the midsection of the slit.

In addition, according to the present invention, a sheet manufacturing method includes the steps of extruding a molten material from a slit formed in the tip of a die in the form of a sheet; and solidifying the sheet by bringing the sheet into contact with a cooling roller, and the temperature of the molten material at the end portions of the slit is set to a lower value than the temperature thereof at the middle portion of the slit.

In the case in which the thickness of the end portions of the sheet in the width direction is double or more compared to that of the product portion, since the end portions of the sheets are heavier than the product portion, the end portions of the sheet move further downward compared to the product portion immediately after the molten material is extruded. Accordingly, the variation in paths h, that is, the difference between the paths along which the product portion and the end portions move is increased. In such a case, the distance along which the end portions move before they reach the cooling roller is reduced, and the end portions are roughly wound around the cooling roller, so that large neck down occurs and the degree of curling of the end portions is increased. Such a situation can be seen in Figs. 1C and 1D.

In contrast, a preferred state of a sheet according to the present invention, in which the sheet can be drawn at a high speed, is schematically shown in Figs. 1A and 1B. Even when the end portions of the sheet are thick, the end portions of the sheet can be prevented from being roughly wound by the cooling roller by reducing the distance between the paths 23 and 24, that is, the variation in paths h. Accordingly, the amount of rising of the end portions of the sheet and the degree of the neck down can be reduced, and the electrode 22 can be disposed at a position close to the sheet. As a result, the sheet can be stably wound at a high speed.

As a method for reducing the variation in paths h, such a method is preferably used in which the temperature of the molten material is adjusted such that the landing points, at which different parts of the molten material land on the roller, are arranged at the same rotational position of the roller. By adjusting the temperature of the sheet at the end portions thereof, a tension applied to the sheet can be optimized and the variation in paths h can be reduced. However, in the case in which the thickness of the end portions of the sheet is 80 times the thickness of product portion of the sheet or more, the weight of the end portions is too heavy that it is difficult to adjust the variation in paths h by adjusting the temperature of the molten material. The variation in paths h is 15 mm or less, and preferably 8 mm or less. More preferably, the variation in paths h is 5 mm or less, which thickness of the end portion of the sheet is greater than three times and less than 30 times as thick as the product portion.

In addition, the temperature of the molten material is preferably adjusted such that the landing points, at which different parts of the molten material land on the cooling roller, are arranged along a straight line which extend in the width direction of the sheet. For example, in Fig. 1C, path of the sheet from the die to the cooling roller is projected on a plane perpendicular to the width direction of the sheet. In addition, a point A shows a point at which the sheet first lands on the cooling roller, and a point B shows a point at which the sheet lands on the cooling roller last. The distance L between the points A and B in the circumferential direction of the cooling roller is preferably 10 mm or less, preferably 7 mm or less, more preferably 3 mm or less. In such a case, the electrode can be disposed at a position closer to the sheet, and the winding speed of the sheet can be increased.

In addition, the point A at which the sheet first lands on the cooling roller, that is, the rear end point of landing points, at which different parts of the molten material land on the roller, in the rotational direction of the roller is preferably disposed within 75 mm, preferably 50 mm or less, more preferably 30 mm or less, from the top point of the cooling roller toward both sides along the circumference of the cooling roller. In this case, in addition to the electrostatic force, the weight of the sheet can be effectively utilized for increasing the adhesion force between the sheet and the cooling roller.

In order to establish the above-described state of the sheet, the slit is disposed in the rear region of a vertical line passing through the rotational axis of the cooling roller in the rotational direction thereof.

In addition, an angle between an extruding direction, in which the molten material is extruded from the slit, and the tangential direction of the cooling roller at the point A, at which the sheet first lands on the cooling roller, is preferably in the range of 30 to 75°, more preferably in the range of 50 to 65°.

In addition, preferably, a sheet manufacturing method includes the steps of extruding a molten material from a slit formed in the tip of a die; and forming a sheet by adhering the molten material on a cooling roller, and the temperature of the molten material at the end portions thereof is set to a lower value than the average temperature between the highest and the lowest temperatures of the molten material at the product portion thereof.

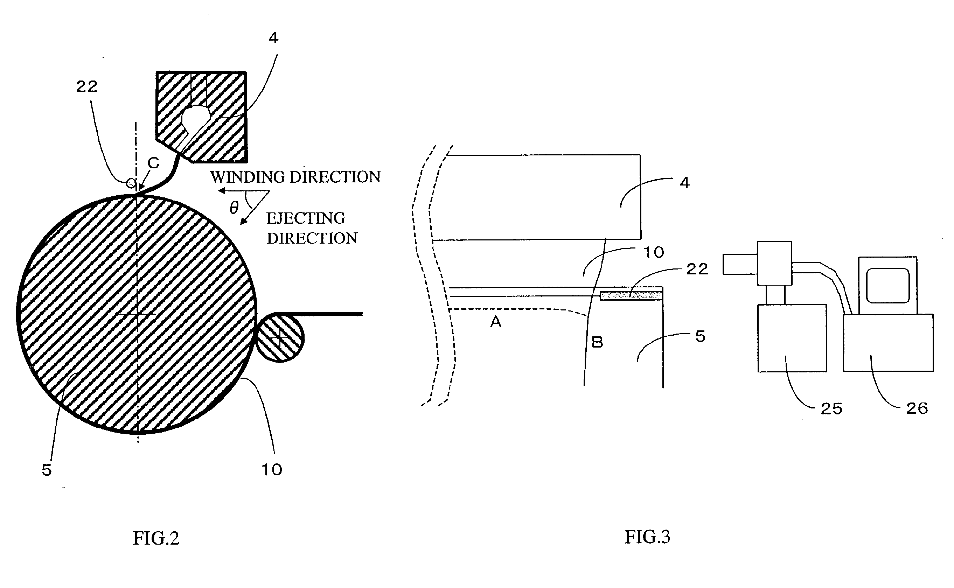

The above-described top point of the cooling roller is defined as one of the two points, at which a vertical line passing through the rotational center of the cooling roller crosses the circumference of the cooling roller, which is disposed at a higher position. The top point of the cooling roller is denoted by C in Fig. 2, and is referred to merely as a "top point C " in the following descriptions. In addition, the above-described extruding direction of the molten material is defined as a direction parallel to the extending direction of the slit formed at the tip of the die, and is referred to merely as a "slit direction" in the following descriptions. Furthermore, such portions of the sheet that are cut off when a final product is wound are referred to as the end portions of the sheet, and such a portion of the sheet that is finally shipped as a product is referred to as the product portion.

In addition, according to the present invention, a sheet manufacturing die includes a slit from which a molten material is extruded in the form of a sheet and which is formed between a pair of lip members; and a heating unit which heats at least one of the lip members such that temperature variation of the lip member in the width direction is within 3%, more preferably within 1% of the absolute value of a difference between the temperature of the molten material which is extruded from the slit and room temperature.

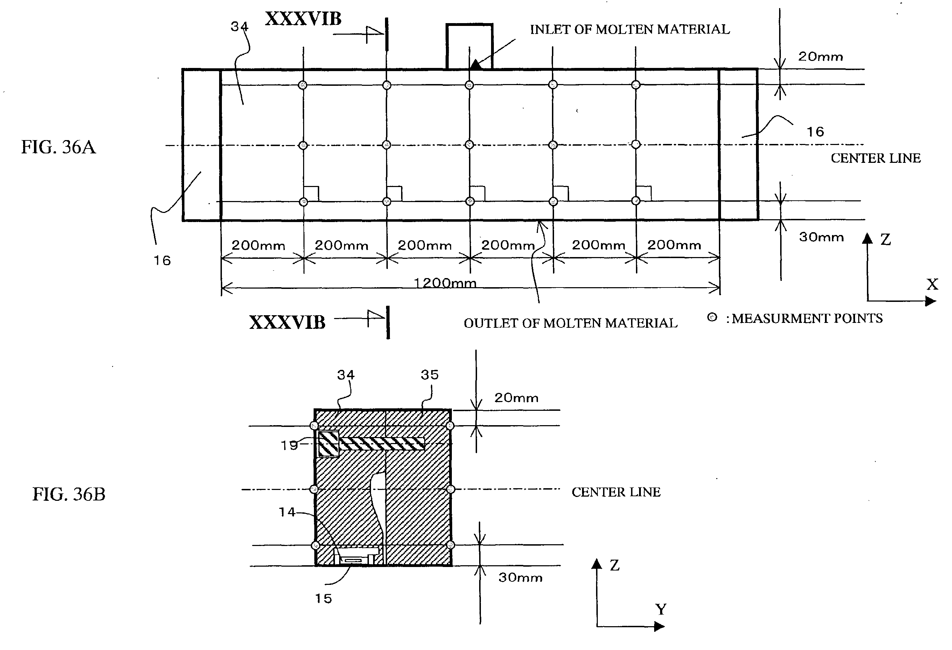

The above-described width direction is a direction parallel to the width direction of the sheet, which is formed by extruding the molten material from the die. In addition, temperature variation of each lip member in the width direction is determined as a difference between the maximum value and the minimum value in the temperatures measured at several points on a line along the width. According to the present invention, temperature variation of each lip member in the width direction may be determined by measuring the temperatures at the surface of each lip member at points defined as described below. Figs. 36A and 36B show an example of a die which includes a pair of lip members, each having a width of 1200 mm. Fig. 36A is a side view of the die and Fig. 36B is a sectional view of Fig. 36A which is cut along line XXXVIB-XXXVIB. The width direction of the die and the sheet is denoted by X, and the direction perpendicular to the width direction of the die is denoted by Y. In addition, vertical direction is denoted by Z. With reference to the figures, each of the lip members is evenly divided into six parts in the X direction by five lines. In each of the lines, the surface temperature is measured by thermocouples at three points: a point 30 mm away from the bottom surface in the Z direction, a point 20 mm away from the top surface in the -Z direction, and the midpoint between the top and the bottom surfaces. The average temperature of the above-described three points is determined as the surface temperature at the corresponding position in the width direction, and the difference between the maximum and minimum temperature in the five positions in the width direction is determined as the degree of temperature variation.

The temperature of the molten material is normally determined by inserting several thermocouples in the die at positions along the width of a manifold and taking the average of the temperatures measured by the thermocouples. However, according to the present invention, the temperature of the molten material may be represented by the temperature measured at the outlet of the die. The temperature of the molten material extruded from the outlet may be measured by, for example, a radiation thermometer such as an infrared radiation thermometer available from Keyence Corporation under the trade name of IT2-50 (sensor unit: IT2-01).

In addition, according to the present invention, the heating unit which heats at least one of the lip members may include a heater which satisfies the following condition:

$$L0 < L < (1.2 \times L0) \qquad (I)$$

wherein L0 is the length of each lip member in the width direction, and L is the length of the heater in the width direction.

In the case in which the surface of the die at the side opposite to the slit is heated from the outside, temperature gradient from the outside toward inside is generated. When heat is applied uniformly in the width direction from the outside, temperature can be made uniform toward inside, and the slit size is increased and decreases uniformly in the width direction in accordance with the thermal deformation of the die.

Temperature variation of the heater is preferably 0.5°C or less. Temperature variation of the heater larger than 0.5°C is not preferable in that in such a case, temperature variation of the lip member to be heated already exceeds 0.5°C at the surface thereof. In addition, when the length of the heater is less than the length of each lip member, the temperature of the lip member to be heated at end portions thereof is reduced due to heat dissipation. When the length of the heaters is more than 1.2 times the length of each the lip member, heating area is too large and electric power is consumed more than necessary. Preferably, the heater is integrally formed also in the direction from a die hopper toward the tip of the die.

In addition, according to the present invention, the heating unit which heats at least one of the lip members may include N heaters (N = 2, 3, ...), of which the temperatures are individually adjusted, and which is arranged in the width direction of the lip member in such a manner that the following conditions are satisfied:

$$dn \leq t,$$

$$(Ln / dn) \geq 0.1,$$

$$L0 < La < (1.2 \times L0) \qquad (II)$$

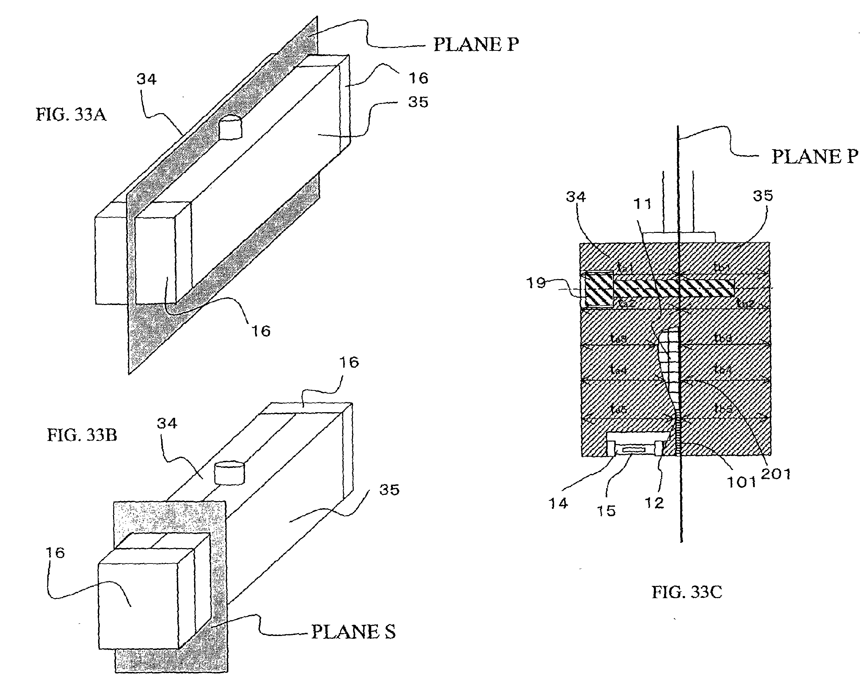

wherein n = 1, 2, ... N-1, L0 is the length of each lip member in the width direction, Ln is the length of the $n^{th}$ heater from one end in the width direction, dn is the size of the gap between the $n^{th}$ and $(n+1)^{th}$ heaters from one end, and t is the average thickness of the lip member to be heated. A method for obtaining the average thickness t of each lip member will be described below. When the lip members are defined as a first lip and a second lip, for example, the average thickness of the second lip is defined as the average distance between the plane including the surface of the second lip which faces the first lip and the surface of the second lip at the opposite side of the slit. The method for obtaining the average thickness t of the lip member will be described below with reference to Figs. 33A to 33C. Fig. 33A shows a plane P including the surface of the second lip which faces the first lip, Fig. 33B shows a plane S which is perpendicular to the width direction of the die, and Fig. 33C shows a sectional view of Fig. 33B cut along the plane S. With reference to Fig. 33C, the thickness of the first lip 34, ta1, ta2, ta3, ta4 and ta5, are measured at five points which are positioned evenly in the extruding direction, and the thickness of the second lip 35, tb1, tb2, tb3, tb4, and tb5, are similarly measured at five points. The thickness of the first lip in the plane S is determined as tsa = (1/5) $\times$ (ta1 + ta2 + ta3 + ta4 + ta5), and the thickness of the second lip in the plane S is similarly determined as tsb = (1/5) $\times$ (tb1 + tb2 + tb3 + tb4 + tb5). Such measurements are similarly performed at five planes which are parallel to the plane S and which are evenly disposed in the width direction, and the average of the thickness obtained at the five planes is defined as t. La is the sum of lengths of the N heaters and sizes dn of the gaps between there. n represents integers from 1 to N-1, and can be counted from either right or left.

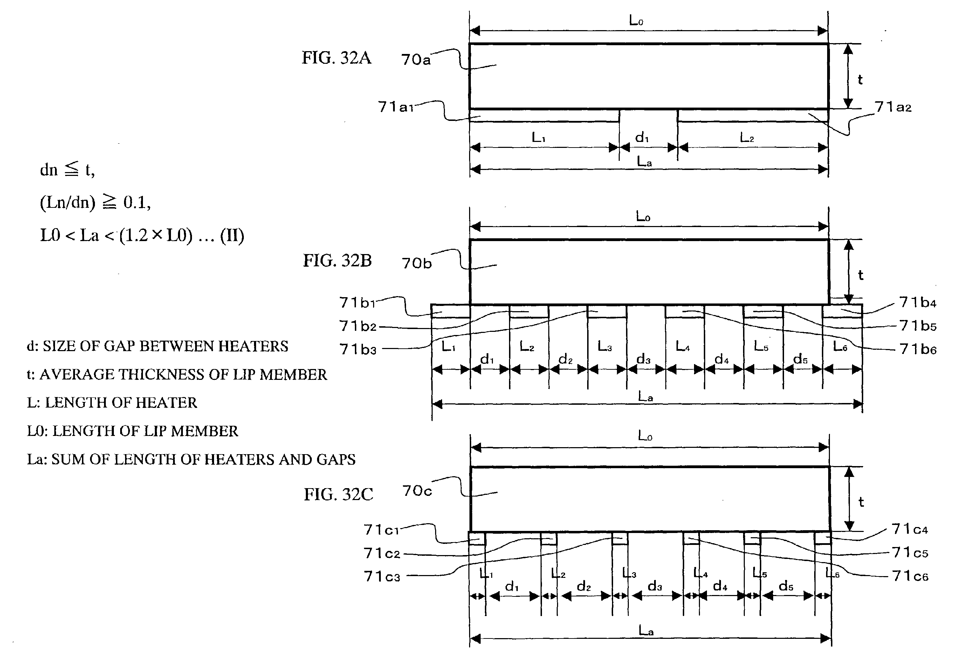

Figs. 32A to 32C shows examples of positional relationships between the heaters and the lip member to be heated. In the figures, heaters and lip members to be heated as seen from the outlet of the molten material, that is, from the tip of the die are shown. Fig. 32A shows an example in which N = 2, and Figs. 32B and 32C show examples in which N = 6. Reference numerals 70a, 70b, and 70c denote the lip members to be heated, and 71a, 71b, and 71c denote the heaters for heating the lip member. The heaters 71a, 71b, and 71c are disposed on the surface of the lip members 70a, 70b, and 70c at the side opposite to slits.

According to the above-described construction, although high-temperature parts exist at position at which the heaters are disposed (when N heaters are provided, N high-temperature parts exist), the degree of temperature variation can be reduced to some extent. Accordingly, nonuniform deformation of the lip members due to temperature variation thereof can be prevented. Especially when dn $\leq$ t is satisfied, although the high-temperature parts corresponding to the heaters exist, the temperature can be made relatively uniform at the region close to the molten material. Thus, the temperature of the molten material can also be made relatively uniform, so that the degree of viscosity variation can be reduced and the throughput of the molten material can be made relatively uniform over the width.

In order to prevent the generation of the high-temperature parts at positions at which the heaters are disposed, the N heaters may be connected to each other with thermal conductors. Alternatively, a temperature-equalizing plate may be disposed between the heater and the die.

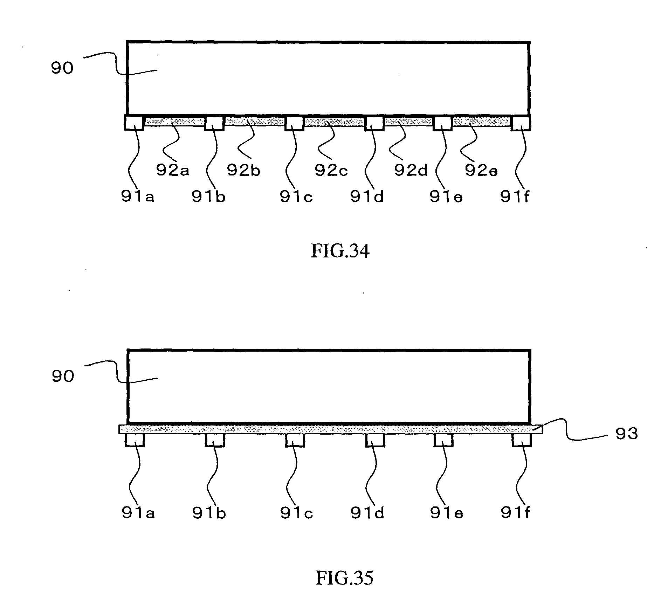

In the case in which the heaters are connected to each other with thermal conductors, they are preferably formed of a metal having a heat conductivity of 10 W/(m·K) or more. More preferably, the thermal conductors are formed of copper or aluminum, and so on. Fig. 34 shows an example of a relationship between the heaters and the thermal conductors. In the figure, a lip member to be heated, heaters for heating the lip member, and thermal conductors as seen from the outlet of the molten material, that is, from the tip of the die, are shown. Reference numeral 90 denotes the lip member, 91a, 91b, 91c, 91d, 91e, and 91f denote the heaters, and 92a, 92b, 92c, 92d, and 92e denote the thermal conductors, which are formed of copper.

In the case in which the temperature-equalizing plate is disposed between the heater and the die, it is preferably formed of a metal having a heat conductivity of 10 W/(m·K) or more; for example, copper, aluminum, etc., may be used. More preferably, the temperature-equalizing plate is formed of a plate of which the surface is treated by sandblasting method so that the surface roughness is made uniform or coated by a material having a high radiation rate such as chromium oxygen, etc.

Fig. 35 shows an example of a relationship between the heaters and the temperature-equalizing plate. In the figure, a lip member to be heated, heaters for heating the lip member, and a temperature-equalizing plate as seen from the outlet of the molten material, that is, from the tip of the die, are shown. Reference numeral 90 denotes the lip member, 91a, 91b, 91c, 91d, 91e, and 91f denote the heaters, and 93 denotes the temperature-equalizing plate. In this example, the temperature-equalizing plate is formed of aluminum, and the surface thereof is treated by the sand blast method so that the surface roughness is made uniform.

In the case in which heat is radiated from the die, the heating unit preferably includes a plurality of heaters of which the temperature can be individually adjusted. Such a construction is advantageous in the case in which the heat radiation varies in the width direction.

More preferably, one or more heaters, which are disposed on at least one of the lip members at the side opposite to the slit, are covered by a heat insulator at the external surface thereof. Such a construction is extremely advantageous in that the influence of heat radiation can be reduced and heaters having simple construction can be used.

The heat insulator is preferably formed of a material having low thermal conductivity such as ceramic fibers, alumina fibers, etc. For example, Fineflex and Rubiel (trade names of Nichias Corporation), and Denka-Arusen (trade name of Denki Kagaku Kogyo Kabushiki Kaisha).

In addition, the heating unit preferably utilizes an infrared ray or a far-infrared ray. When an infrared ray or a far-infrared ray are utilized, it is possible to uniformly heat the exterior surface of the lip member to be heated at the side opposite to the slit. For example, a lamp which extends in the width direction of the lip members, that is, a lamp including two electrodes, which are arranged in the width direction of the lip members, and a tube, in which electric discharge occurs, may be used. Alternatively, a plurality of lamps can be evenly arranged in the width direction of the die in such a manner that the distances between the lamps and the exterior surface of the lip member to be heated at the side to the slit are the same. More preferably, the surface of the lip member to be heated at the side opposite to the slit is made rough and/or black so that heat can be more effectively absorbed and the emissivity can be increased.

Alternatively, the heating unit may heat at least one of the lip members by directly applying current through there. In such a case, since one or both of the lip members are heated by Joule's heat directly from inside, the temperature thereof can be made uniform. The current may be applied through the lip member to be heated by drilling two holes in the lip member and inserting screws, which serve as electrodes, in the holes. The electrodes are preferably disposed in the lip member to be heated at positions as close to both ends as possible in the width direction, and uniform heating can be realized by disposing one electrode (positive) at one end and the other electrode (negative) at the other end.

In addition, the heating unit may heat at least one of the lip members by high frequency induction heating. Also in this case, one or both of the lip members are heated from inside, so that the temperature thereof can be made uniform.

Preferably, at least one of the lip members has uniform thickness. As described above, when the lip members are defined as a first lip and a second lip, for example, the average thickness of the second lip is defined as the average distance between the plane including the surface of the second lip which faces the first lip and the surface of the second lip at the opposite side of the slit. Fig. 33A shows the plane P including the surface of the second lip which faces the first lip, Fig. 33B shows a plane S which is perpendicular to the width direction of the die, and Fig. 33C shows a sectional view of Fig. 33B cut along the plane S. With reference to Fig. 33C, the thickness of the first lip 34, ta1, ta2, ta3, ta4 and ta5, are measured at five points which are positioned evenly in the extruding direction, and the thickness of the second lip 35, tb1, tb2, tb3, tb4, and tb5, are similarly measured at five points. Such measurements are similarly performed at five planes which are parallel to the plane S and which are evenly disposed in the width direction, and the thickness at twenty-five points in total are measured for each of the first lip and the second lip. The thickness variation is defined as the difference between the maximum thickness and the minimum thickness of the twenty-five points. When the thickness of the first and the second lips are uniform, the temperature can be made uniform form the periphery toward inside, and heat expansion of the die occurs uniformly in the width direction. More preferably, the thickness variation of at least one of the lip members is within 10% of the average thickness thereof, and a single heater which satisfies condition (I) or a plurality of heaters which are disposed so as to satisfy condition (II) are used. In such a case, heat is conducted proportionally to the distance, and the temperature variation at parts close to the flow passage for the molten material is easily set within 3%, due to the interference of the heat conduction from the single heater or from the multiple heaters. In addition, molten material can also be heated uniformly.

Preferably, the lip members are fixed to each other by a fixing member formed of the same material as the lip members. When the thermal characteristics, that is, temperature, coefficient of thermal expansion, thermal conductivity, etc., of the fixing members and the lip members are different, the lip members are restrained by the fixing bolts when the temperature of the entire body of the die is not uniform. In such a case, nonuniform deformations of the lip members occur.

In addition, according to another aspect of the present invention, a sheet manufacturing die includes a slit from which a molten material is extruded in the form of a sheet; a pair of lip members which form the slit between there; and at least one pair of sealing members which are pressed one against each end surface of at least one of the lip members in a slidable manner. The die may further includes at least one pair of pressing members which are fixed one at each ends of at least one of the lip members and which press the sealing members. In addition, preferably, the die further includes a heating unit which heats the die such that the temperature variation of the die in the width direction thereof is within 3% of the absolute value of a difference between the temperature of the molten material which is extruded from the slit and room temperature.

In such a construction, the end portions of the lip members in the width direction are not restrained, so that the slit size at the tip of the die, which varies due to the inner pressure of the molten material and thermal deformation of the die, can be made uniform over the width. Accordingly, the thickness distribution of the sheet can also be obtained. In addition, even when the temperature of side plates, which are provided one at each end of the lip members, is not completely the same as the temperature of the lip members, the difference in amounts of heat expansion due to the temperature difference does not occur, so that the restraining force due to the difference in amounts of extension is not applied. In addition, since the die is heated so that the temperature variation of the die in the width direction of the sheet is within 3% of the absolute value of a difference between the temperature of the molten material which is extruded from the slit and room temperature, the die deforms uniformly in the width direction. Accordingly, the thickness distribution of the sheet can be made uniform. Although the throughput varies, this can be solved by adjusting the speed of forming the sheet. Preferably, the die is a T die in which the cross-section of the slit in a plane perpendicular to the width direction is 1/20 of the cross-section of the manifold or less, and the size of the slit is 1/4 of the length from the manifold to the tip of the lip members or less. In such a case, even when the slit size between the lip members is increased uniformly in the width direction, a sheet having a uniform thickness distribution can be obtained. As described above in the description of the related art, in a coat hanger die, the pressure balance determined in the design phase is changed in accordance with the slit size between the lip members. Thus, in order to prevent the degradation of thickness uniformity in the width direction, the change of the pressure balance must be predicted in advance. However, it is extremely difficult to predict the change of the pressure balance and prevent the degradation of thickness uniformity. Accordingly, when the present invention is applied to a T die, a die having a higher performance compared to the technique disclosed in the above-described Japanese Patent No. 2598617, which concerns a coat hanger die, can be obtained.

In addition, since the die is uniformly heated so that the temperature variation of the die in the width direction of the sheet is within 3% of the absolute value of a difference between the temperature of the molten material which is extruded from the slit and room temperature, the die deforms uniformly in the width direction when it is heated. Thus, a die having a higher performance compared to the technique disclosed in the Japanese Unexamined Patent Application Publication No. 9-277343 can be obtained.

The sealing members preferably perceive a pressing force which satisfies the following condition:

$$\mu F < P < F \text{ [Pa]} \qquad \text{(III)}$$

wherein $\mu$ is the coefficient of static friction of the sealing members relative to the lip member on which the sealing members are provided, F is the pressing force, and P is an internal pressure of the molten material.

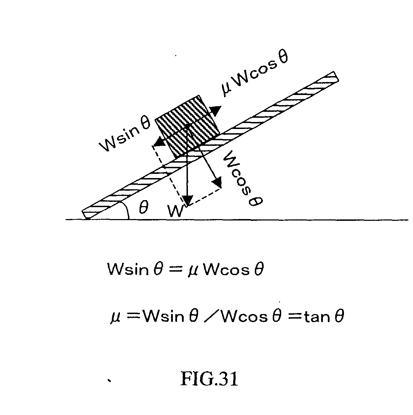

A method for measuring the coefficient of static friction $\mu$ will be described below. With reference to Fig. 31, when a plate receiving an object having a weight of W is gradually tilted by raising one end thereof, the object overpowers the friction and starts to slide down the plate at a certain angle. This angle is called a friction angle $\theta$. When the coefficient of static friction is $\mu$, the frictional force can be expressed as the product of a force applied by the object to the surface in the direction perpendicular to the surface, that is, $W\cos\theta$, by $\mu$ ($\mu W\cos\theta$). Since the frictional force is equivalent to the force applied to the object in the direction parallel to the surface ($W\sin\theta$), the static friction can be obtained as $\mu = \tan\theta$. Thus, the coefficient of static friction $\mu$ can be determined by measuring the friction angle $\theta$. As an easy method for measuring the coefficient of static friction, a method in which a stationary object is pulled in a horizontal direction and a force applied to the object at the time when the object starts to move is measured can also be used. As an example of a commercial measuring device utilizing this principle, Heidon Tribogear Type: 94i made by Shinto Kagaku Co., Ltd. is known in the art.

The pressing force F may be applied as, for example, a fixing force applied by a bolt, etc., and the fixing force is calculated based on the diameter of the bolt according to Japanese Industrial Standard (JIS) and a fixing torque. A calculating method is described in, for example, "Catalogue of Mechanical Design and Drawing based on JIS" written by Kiyoshi Ohnishi and published by Rikogakusha. The pressing force applied to the sealing member can be calculated based on the number of bolts which are used, and since the pressing force F according to the present invention is expressed in terms of pressure, the calculated force is divided by the area of the sealing member.

The actual pressure may be measured by disposing a commercial pressure measuring film, for example, Prescale made by Fuji Photo Film Co., Ltd., between the lip member and the pressing member. The measurement principle of the pressure measuring film will be described below. A film constructed by forming a coloring agent layer and a developing agent layer on a supporter is used, and, when a pressure is applied, microcapsules contained in the coloring agent layer brake and color agent contained therein is adsorbed on the developing agent. Accordingly, color is developed due to a chemical reaction. Alternatively, the pressure may be measured by using a tectile sensor system available from Nitta Corporation, in which a sensor sheet formed by laminating two sheets, in which line electrodes are arranged, is used and the pressure is determined based on the resistance which varies in accordance with the pressure.

In the design phase of the die, the internal pressure P is calculated from the equation of pressure loss, the equation of continuity, and the equation of pressure balance by inputting the throughput of the molten material per unit of time. The actual internal pressure may be measured by using, for example, a pressure transducer available from KK Dynisco. Since various types of sensors are available, the internal pressure can be measured at a predetermined position between the extruder and the die by disposing such sensors at the corresponding position.

When the above-described condition (III) is satisfied, the pressing force of the pressing member is larger than the internal pressure of the molten material at the end portions of the manifold in the width direction thereof, so that leakage of the molten material does not occur. In addition, the internal pressure of the molten material is larger than the frictional force between the sealing members and the lip members, so that the expansion of the tip portions of the lip members is not restrained by the frictional force between the sealing members and the lip members. When the expansion of the tip portions of the lip members is restrained, that is, when the tip portions cannot slide relative to the sealing members, the slit size cannot be made uniform over the width. More specifically, the end portions of the lip members expand by a smaller amount compared to the middle portions thereof, at which the expansion of the lip members is not restrained, so that the slit size at the end portions and the slit size at the middle portion differ from each other. On the contrary, when condition (III) is satisfied, the slit size at the tip of the lip members varies uniformly in the width direction. Thus, even when the internal pressure of the molten material and the overall throughput varies, the distribution of throughput in the width direction does not change. Since the overall throughput can be easily adjusted by adjusting the winding speed of the sheet in the solidifying process thereof, a predetermined thickness distribution can be obtained in a relatively short time after the ejection is started.

The sealing members are preferably formed of a material such that the deformation thereof due to an internal pressure of the molten material is in an elastic region. In such a case, the molten material does not leak from the end portions of the die. In addition, the sealing members are preferably formed of a material of which the coefficient of static friction relative to the lip members (for example, stainless steel) is 0.2 or less. When the coefficient of static friction is more than 0.2, the end portions of the lip members are restrained when the pressing force is large, for example, five times the internal pressure or more according to condition (III). In such a case, since the slit size is increased at the middle portion due to the internal pressure of the molten material, the shape of the sheet is such that the middle portion thereof is convex. In contrast, when the coefficient of static friction is 0.2 or less, the end potions of the lip members can slide even when the pressing force is large, for example, five times the internal pressure or more according to condition (III). Thus, both the leakage of the molten material and the degradation of thickness uniformity due to the restraining of the end portion of the lip members can be prevented. Accordingly, the sealing members are preferably formed of a material of which the coefficient of static friction relative to the lip members is 0.2 or less. The above-described condition regarding the coefficient of static friction is preferably satisfied at the operating temperature of the die.

For example, in the case in which a polyester sheet is manufactured, the molten material is often heated to 300°C. Thus, the coefficient of static friction of the sealing member relative to the lip members preferably satisfy the above-described condition at 300°C. Materials which satisfy such a condition include aluminum, stainless of which the surface is polished, copper, phosphoric bronze, etc., from the group of metal, and Vespel made by Dupont, which is a polyimide resin, TI Polymer made by Toray Industries, Inc., Yupimol made by Ube Industries, Ltd., etc., from the group of resin. In order not to damage the surface of the lip members, the sealing members are preferably formed of a material having a lower surface hardness compared to the lip members.

In the above-described materials, Vespel is especially suitable in that it has a low coefficient of static friction at a high temperature such as 300°C.

In addition, according to the present invention, at least one of the opposing surfaces of the lip members has a uniform flatness in the width direction thereof, and a manifold, which extend in the width direction, is formed between the lip members at the midsections thereof.

Preferably, only one of the lip members is provided with adjusting unit which adjusts the size of the slit, and the surface of the other lip member at the side of the slit has a uniform flatness.

In the following descriptions, the lip member which is provided with the adjusting unit will be referred to as a first lip, and the lip member having the uniform flatness will be referred to as a second lip. The deformation of the first lip naturally occurs due to the adjustments performed by the adjusting unit. Thus, the second lip is preferably not provided with any adjusting units (especially mechanical units), so that the deformation thereof can be prevented and the surface thereof can be used as the reference for the first lip. In addition, with respect to the processing, the second lip is preferably formed to have a simple structure, and the surface of the second lip which faces the first lip is preferably flat.

For example, a case is considered in which the slit size between the lips A and B is set to ds, and a biaxial drawing process in which the sheet size is increased by five times in the longitudinal direction, and tripled in the lateral direction, in order to obtain a resin sheet having a thickness of 10 μm. Theoretically, throughput varies proportionally to the cube of the slit size. Accordingly, in the case in which the neck down is ignored, when the slit size changes by $\pm \Delta t$, the throughput varies in the range expressed as follows:

$$K(t - \Delta t)^3 \leq \{Q = K(t)^3\} \leq K(t + \Delta t)^3 \qquad \text{(IV)}$$

wherein K is a constant of proportion, $\Delta t$ is the variation in slit size, and Q is the throughput.

When t = 2 mm, the flatness of one of the opposing surfaces of the lip members is 20 μm, and K = 1, distribution range of throughput can be obtained from expression (IV) as 0.97 < Q = 1 < 1.03, and the thickness variation of the sheet obtained after the ejection process is 6%. The flatness is defined as the difference between the maximum height and the minimum height in the topography of a surface, and can be measured by a coordinate measuring machine disposed on a precision table by sliding a dial gauge in the width direction of the die and determining the maximum displacement.

In addition, in the case in which t = 2 mm and the flatness of one of the opposing surfaces of the lip members is 10 µm, the thickness variation of the sheet obtained after the ejection process is 3%.

In the drawing process, relatively thin parts are drawn by a larger rate compared to relatively thick parts; thus, thickness variation increases.

Accordingly, when a product of which required thickness uniformity is extremely high such as a tape for magnetic storage medium, etc., is manufactured, the thickness distribution of the final product is adjusted using the adjustment unit of the die. Accordingly, there is a problem in that a long time is required for adjusting the thickness distribution. In addition, even when the required thickness uniformity is obtained, permanent deformation of the lip member, which is provided with the adjustment unit, often occurs at the tip thereof. Furthermore, there is also a problem in that it is difficult to maintain the required thickness uniformity.

Accordingly, the flatness, that is, the difference between the maximum height and the minimum height, of the surface of the second lip which faces the first lip is 20 µm or less, more preferably, 10 µm or less in the width direction.

From the viewpoint of processing, when only the tip of the second lip is treated to increase the flatness thereof, error may be caused due to the inclination of the surface. Accordingly, the entire region of the surface of the second lip which faces the first lip is treated to increase the flatness thereof. More preferably, the flatness, that is, the difference between the maximum height and the minimum height, of the entire surface of the second lip is 10 µm or less. Especially in the case in which the die is applied for manufacturing a tape for magnetic storage medium of which the thickness is 10 µm or less, extremely high thickness uniformity is required. Since the thickness variation greatly depends on the assembly accuracy of the die, the surface of the second lip which faces the first lip is preferably completely flat. In such a case, the processing can be performed more easily so that the processing accuracy can be increased, and the assembly of the die can also be performed more easily. In the case in which the second lip is not provided with the adjustment unit, deformation thereof due to the adjustment does not occur. Thus, a stable reference surface for the adjustment can be obtained, and an adjustable unit in which the adjustment value (control input) of the slit size corresponds to the controlled value can be obtained. In addition, even when the first lip, which is provided with the adjusting unit, is deformed, the adjustments can be performed by using the second lip as the reference. Furthermore, when the permanent deformation of the first lip has occurred, only the first lip must be changed, so that costs can be reduced compared to the structure in which both the first and the second lips are provided with the adjusting units. From the same reasons as described above, preferably, one the first lip is provided with a manifold which spreads the molten material in the width direction. Although the second lip may also be provided with a manifold, deformation of the second lip may occur due to the internal stress of the molten material applied to the manifold when the die is used for a long time. In addition, in the case in which the manifold is also formed in the second lip, process strain may remain therein and accuracy at the tip portion thereof may not be the same as determined in the design phase. Accordingly, the second lip is preferably not provided with the manifold, and the surface of the second lip which faces the first lip is preferably flat. In addition, preferably, the surface of the second lip at the side opposite to the surface facing the first lip is also flat. More preferably, the surface of the second lip at the side opposite to the surface facing the first lip is parallel to the surface facing the first lip. Normally, when the die is assembled, the second lip is first disposed on a strong and flat table such as a face plate, etc., in such a manner that the surface opposite to the surface to face the first lip is at the bottom, and then the first lip is placed on the second lip. Thus, when the surface of the second lip which faces the first lip and the surface thereof at the opposite side are parallel and are flat, the possibility that the displacement between the first and the second lips occurs can be reduced, and the assembly accuracy can be increased. In addition, since the thermal deformation can be made uniform, the slit size can be adjusted at a higher accuracy.

The adjusting unit adjusts the slit size between the first and the second lips by mechanically moving the tip portion of the first lip. A device for moving the tip portion of the first lip may be, for example, a lip moving unit including a motor and a moving element, a piezoelectric device, a magnetostrictive device, an electrostatic device, etc. Alternatively, heaters which apply heat to adjustment members may be used and the adjustment may be performed by utilizing thermal deformation of the adjustment members. Preferably, heaters which are stable even at a high temperature are used, and the adjustment may be performed by utilizing thermal deformation of the adjustment members. Alternatively, the thickness may be adjusted by applying heat to the molten material using heaters, etc., disposed in first lip at the tip thereof, and adjusting the viscosity of the molten material. The adjustment of the thickness distribution utilizing the temperature is suitable for fine adjustments.

Preferably, in the middle region including at least 80% of the manifold in the width direction, the cross-section of the slit in a plane perpendicular to the width direction is 1/20 of the cross-section of the manifold or less, and the size of the slit is the length of 1/4 from the manifold to the tip of the lip members or less. More preferably, the size of the slit is the length of 1/4 to 1/200 from the manifold to the tip of the lip members

As disclosed in Japanese Patent Publication No. 63-7133, in the case in which biaxial drawing is performed, the thickness of end portions of a resin sheet are often increased in order to ensure the clipping of the end portions in the lateral drawing and stabilize the neck down. Thus, when the cross-section of the slit in a plane perpendicular to the width direction is 1/20 of the cross-section of the manifold or less, and the size of the slit is 1/4 or less, more preferably 1/4 to 1/200 of the length from the manifold to the tip of the lip members in the middle region including at least 80% of the manifold in the width direction, the thickness variation can be easily suppressed to 5% in the design phase.

When the length of the slit is more than 1/4 of the length from the manifold to the tip of the lip members, the molten material is too easily extruded from the slit due to the gravitational force rather than expand in the width direction. Thus, thickness uniformity in the width direction may be degraded, and the molten material may be extruded in a pulsatile manner. When the length of the slit is less than 1/200 of the length from the manifold to the tip of the lip members, linear holes may be formed in the molten material in accordance with the composition thereof. In addition, so-called Barus effect, in which the thickness of the molten material becomes larger than the slit size between the lip members, may occur and the molten material may hang down at the bottom of the lip members. Also in this case, linear holes may be formed in the molten material. Accordingly, the length of the slit is preferably 1/4 to 1/200 of the length from the manifold to the tip of the lip members.

In order to easily realize the above-described construction, a T die is preferably used. In such a case, the thickness distribution of a resin sheet can be easily made uniform.

In addition, according to the present invention, a sheet manufacturing apparatus includes the die having the above-described construction.

Furthermore, according to the present invention, a sheet is manufactured using the above-described sheet manufacturing apparatus by the sheet manufacturing method.

According to the present invention, when a sheet is manufactured by the electrostatic charging method, the sheet extruded by the die can be stably wound around the cooling roller at a high speed such as 60 m/min. In addition, a sheet having a smooth surface can be obtained.

In addition, the molten material can be extruded in a state close to the state determined in the design phase. When the die is set to the manufacturing apparatus and the molten material is extruded from there, the sheet can be immediately processed and made in the form of a product. More specifically, the sheet of the molten material extruded from the die has a predetermined thickness distribution in the width direction, and the amount of material and time which are wasted after the sheet manufacturing process is started can be reduced, and the sheet can be manufactured at low costs. In addition, since the die can be prevented from receiving too much stress, permanent deformation of the die does not occur even when the die is used for a long time. With respect to a product of which required thickness uniformity is extremely high such as a tape for magnetic storage medium, etc., a high shape fineness of a sheet roll is also required. According to the present invention, such requirements can be satisfied, and yield can be increased.

As a result, according to the die, the sheet manufacturing apparatus, and sheet manufacturing method of the present invention, a high-quality sheet can be manufactured with high yield rate.

DESCRIPTION OF THE PREFERRED EMBODIMENTS

Embodiments of the present invention will be described below with reference to the accompanying drawings; however, they are not intended to limit the scope of the present invention.

First Embodiment

Figs. 2 and 3 are schematic diagrams which show an example of a sheet manufacturing apparatus according to the present invention. In the figures, reference numeral 4 denotes a die, 5 denotes a cooling roller, 22 denotes an electrode for charging the sheet with static electricity, and 10 denotes a sheet. In addition, 25 denotes a lens which takes in an image of the path of the sheet from the die to the cooling roller, and 26 denotes an image analyzer which analyzes the obtained image.

With reference to Fig. 2, the die is disposed in the rear region of the vertical line passing through the center of the roller in the rotational direction thereof. Such an arrangement is preferable in that the sheet easily lands on the cooling roller at a position close to the top point of the cooling roller. In the case in which the winding speed of the sheet is low, the direction in which the sheet moves from the die to the cooling roller is close to the vertical direction. Thus, in such a case, the die can be disposed such that a slit there of is positioned closer to the central line of the cooling roller.

Although the sizes of the die and the cooling roller are not limited, in the case in which the sheet lands on a position close to the top point of the cooling roller, the diameter of the cooling roller is preferably large so as to make the landing surface of the sheet as flat as possible. Although a cooling roller having a diameter close to 1.0 m is often used, a large cooling roller having a diameter close to 2.0 m is more preferable.

The surface of the cooling roller is determined in accordance with the characteristics of the sheet to be manufactured. Generally, when the maximum height Ry of the surface roughness is around 0.5 $\mu$m, a relatively smooth sheet can be obtained. The maximum height Ry less than 0.5 $\mu$m is of course more preferable. In the case in which the required smoothness of the sheet is not very high, the maximum height Ry of the surface roughness may be around 1.0 μm.

As the electrode for charging the sheet with static electricity, various types of electrodes such as a wire electrode, a blade electrode, etc., may be used.

An angle α between the extending direction of the slit, that is, the ejection direction of the molten material, and a direction in which the sheet is wound, that is, the tangential direction of the cooling roller at a point at which the sheet first lands on the cooling roller, is preferably less than 90°, and more preferably, in the range of 30 to 75°, and still more preferably, in the range of 50 to 65°. In such a case, the winding process of the sheet is adequately performed after it is extruded from the slit, so that the variation in paths h can be reduced.

Although a die may be attached in an inclined manner in order to realize the above-described adequate ejection angle, it is often difficult to adjust the attaching angle at a high accuracy. In such a case, the die shown in Fig. 2, which is constructed such that the slit is formed at an angle, is preferably used.

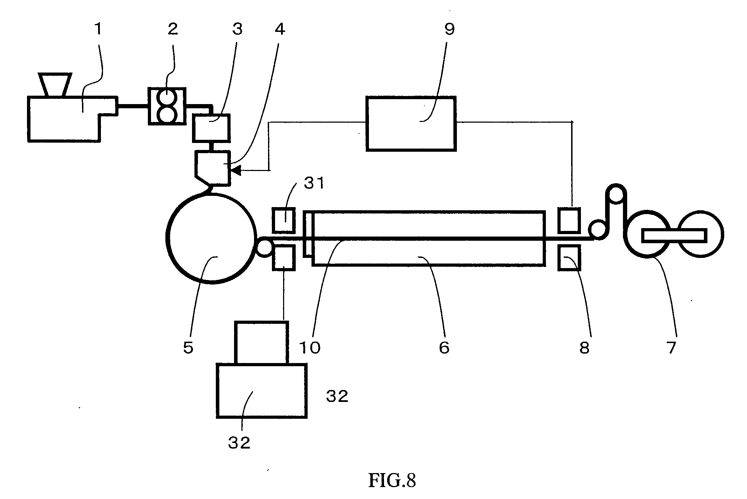

As shown in Fig. 8, preferably, the thickness of the sheet is measured on-line by disposing a thickness gauge 31, which is similar to the thickness gauge 8, at a position in front of the drawing machine, and the result of the measurement is monitored by a monitoring device 32. In the case in which the thickness gauge cannot be installed, a sample sheet may be taken out after the sheet is separated from the cooling roller and the thickness thereof may be measured off-line.

With reference to Fig. 3, the unit including the lens 25 and the image analyzer 26 is an example of a system which can simply measure the variation in paths h at high accuracy. In this unit, an image of the sheet as seen from the width direction thereof is recorded, and the variation in paths h is determined by analyzing the image. A detailed method for obtaining the variation in paths h will be described with reference to Fig. 1C. The distance between an arbitrary point S on the path of the product portion of the sheet and a point T, which is the intersection of the normal line at the point S and the path of the end portions of the sheet, is defined as the variation in paths h. Preferably, an image analyzer having a function of calculating the distance between two arbitrary points is used, and, in such a case, the measurement can be easily performed at high accuracy by using such function. In addition, the lens used for taking in the image preferably have especially high resolution. According to this method, the landing point of the sheet can also be measured.

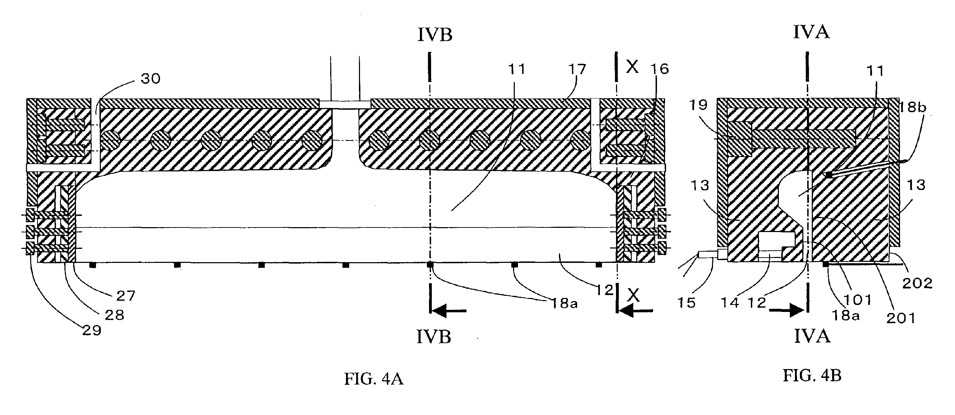

Figs. 4A and 4B are schematic diagrams of an example of a die according to the present invention. With reference to Figs. 4A and 4B, reference numeral 16 denotes side plates which prevents the leakage of the molten material at the end portions of the die, 27 denotes sealing members which seal the molten material, 28 denotes plate heaters for heating the molten material at the end portions of the die, 29 denotes pressing bolts for fixing the sealing members, and 30 denotes cooling ducts for controlling the temperature around the manifold.

A simple and reliable method for adjusting the variation in paths h is to control the temperature of the molten material at the end portions thereof in the width direction, and the construction shown in Fig. 4 realizes the temperature control of the molten material at the end portions thereof. The plate heaters 28 are constructed so as to heat the sealing members 27 and the end portions of the molten material at the same time. As the plate heaters 28, rubber heaters formed of resin are preferably used, since they can be easily attached. However, in the case in which the die is constantly heated to around 300°C, heaters constructed of metal are preferably used. Alternatively, the plate heaters may be formed by arranging cartridge heaters and joining them.

The cooling ducts extend from the side plates 16 to the upper surface of the die, and is used for cooling the molten material at the end portions thereof. An easy method for adjusting the temperature is to transfer air through the cooling ducts. Alternatively, worm water, vapor, etc., may also be used.

The sealing members for sealing the molten material are preferably in such a state that they are deformed to some extent due to a force applied by the pressing bolts 29, and are preferably formed of stainless steel, aluminum, etc. Alternatively, sufficient sealing effect may also be obtained by a resin such as Teflon, Vespel, etc.

Next, the sheet manufacturing process using the above-described manufacturing apparatus will be described below. First, the molten material is extruded from the die in the form of a sheet, and the obtained sheet is wound around the cooling roller. The winding speed of the sheet is gradually increased. Although the electrode may be disposed after the winding speed is increased to a predetermined value, the variation in paths h, the position of the electrode, and the winding speed are preferably adjusted at the same time in accordance with each other. This operation may either be performed manually or automatically by programming the series of processes.

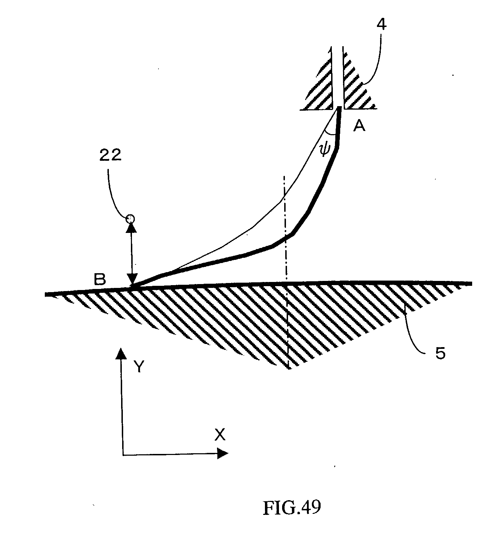

In the operation of adjusting the variation in paths h, the path of the product portion and the path of the end portions can be made closer to each other when the conditions which will be described below are satisfied. Fig. 49 shows paths of the product portion and the end portions of the molten material from the die to the cooling roller, in which the horizontal direction is defined as X direction and the vertical direction is defined as Y direction for convenience. With reference to Fig. 49, an angle ψ between the direction in which middle portion (product portion) of the molten material is extruded from the die and the direction in which end portions of the molten material are extruded from the die is preferably 20° or less, and more preferably, 10° or less. In such a case, the adjustment of the variation in paths h can be more easily performed.

In addition, the path of the middle portion (product portion) of the molten material is preferably disposed at the upper region relative to the paths of the end portions of the molten material. In such a case, the electrode for charging the sheet with static electricity can be disposed at a position closer to the molten material.

In addition, in a perpendicular line dropped from the electrode, which is used for applying the electrostatic force to the sheet, to the cooling roller, the distance between the electrode and the sheet is preferably 3 mm or less, and more preferably, 2 mm or less.

Preferably, the above-described conditions of the molten material are satisfied by adjusting the temperature distribution of the die in the width direction.

Accordingly, the distance between the paths of the product portion and the end portions of the sheet can be reduced, and the positional relationship between the sheet and the electrode can be optimized. Accordingly, the sheet can be stably wound at a high speed, and costs can be largely reduced.

Second Embodiment

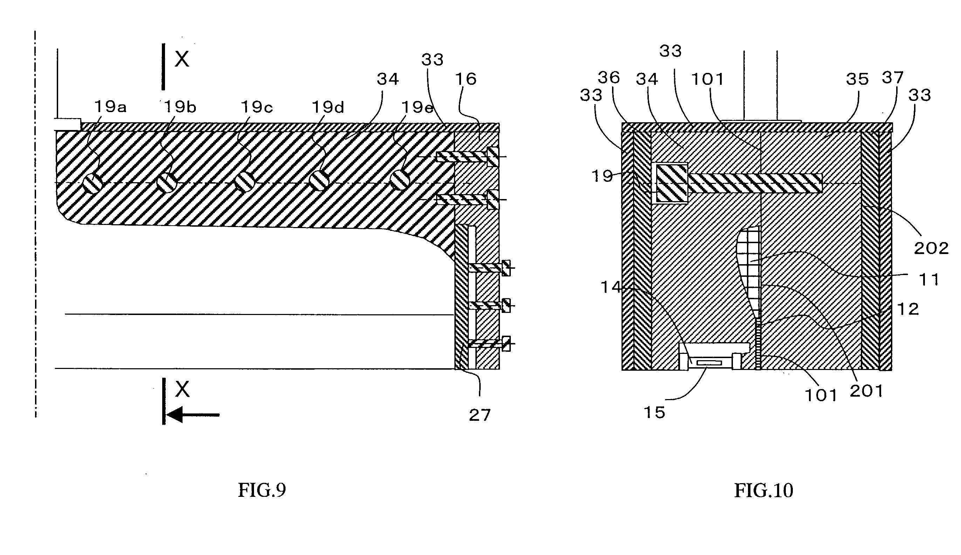

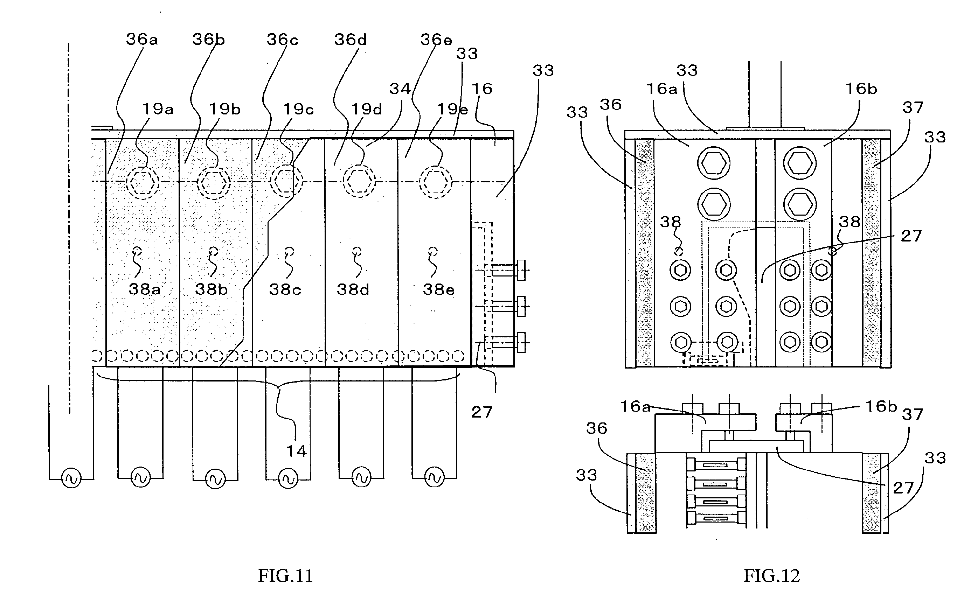

Fig. 9 is a schematic drawing which shows a die according to the second embodiment of the present invention, and Fig. 10 is a schematic sectional view of Fig. 9 cut along line X-X, that is, a line perpendicular to the width direction of the die. Fig. 11 is a schematic front view of the die according to the second embodiment, and Fig. 12 is a schematic side thereof. The die includes a first lip 34 and a second lip 35 which are joined in such a manner that they oppose each other. As shown in Fig. 11, the first lip 34 is provided with a plurality of adjustment members 14 which are arranged in the width direction at a constant interval. As shown in Fig. 10, each of the adjustment members 14 is provided with a heater 15, of which the heat can be individually controlled. The heaters 15 receive current via electric lines from an electric power supply (not shown), so that heat is generated. Thus, heat expansion of the adjustment members 14 occurs and the tip portion of the first lip 34 is pressed, so that the distance between the first lip 34 and the second lip 35 at the tip thereof is reduced. The movement of the tip portion of the first lip 34 toward and away from the second lip 35 can be controlled by utilizing the heat expansion of the adjustment members 14 and controlling heat applied thereto.

The first lip 34 and the second lip 35 are fixed to each other by a plurality of point support members 19. The first lip 34 is provided with a manifold 11, which is a hollow portion for spreading the molten material in the width direction, and a slit 12 is formed continuously with the manifold 11 along the entire region of the die in the width direction. The surface roughness of a surface 101, which is a surface of the second lip 35 which faces the first lip 34, is such that the difference between the maximum height and the minimum height is 10 $\mu$m.

As shown in Figs. 10 and 12, a sheet heater 36 is provided on the exterior surface of the first lip 34, and a sheet heater 37 is provided on the exterior surface of the second lip 35. In addition, heat insulators 33 are provided on the exterior surfaces of the sheet heaters 36 and 37, and on the upper surfaces of the first and second lips 34 and 35. Thus, a construction such that heat applied to the die does not easily dissipate from the side surfaces in which the slit is not formed is realized. In order to make the temperature in the width direction uniform, the sheet heater 36 is constructed of a plurality of members 36a, 36b, 36c, 36d, and 36e as shown in Fig. 11, and the sheet heater 37 is also constructed of a plurality of members. As shown in Figs. 11 and 12, the sheet heater members are individually provided with temperature sensing elements (thermocouples such as chromel-alumel thermocouples, etc.) 38a, 38b, 38c, 38d, and 38e, so that the temperature distribution in the width direction can be accurately measured and controlled so that the temperature is uniform.

As shown in Figs. 9 and 12, a sealing member 27, which is provided for sealing the molten material, is strongly pressed against the molten material by a pressing member 16a, which is attached to the first lip 34, and a pressing member 16b, which is attached to the second lip 35. The pressing force applied to the sealing member 27 is larger than the internal pressure of the molten material. The pressing members 16a and 16b are separately formed from the following reason. That is, when a single pressing member is strongly attached to both the first and second lips 34 and 35, the first and the second lip 34 and 35 are restrained by the pressing member. Thus, when the slit size of the die is increase due to the internal pressure of the molten material, the slit size is increased by a smaller amount at the end portions compared to the amount by which the slit size at the middle portion is increased. Thus, the operation of making the slit size uniform over the width of the present invention cannot be adequately performed. Accordingly, the pressing member 16a and the pressing member 16b are separately formed. In such a case, in addition to the above-described advantage in that the degradation of slit size distribution can be prevented, the following advantage can also be obtained. That is, even when the amounts of heat expansion of the pressing member 16a, the pressing member 16b, and the sealing member 27 are different from that of the first and second lips 34 and 35, the restraining of the first and second lips 34 and 35 can be prevented. Accordingly, the slit size can be easily made uniform over the width.

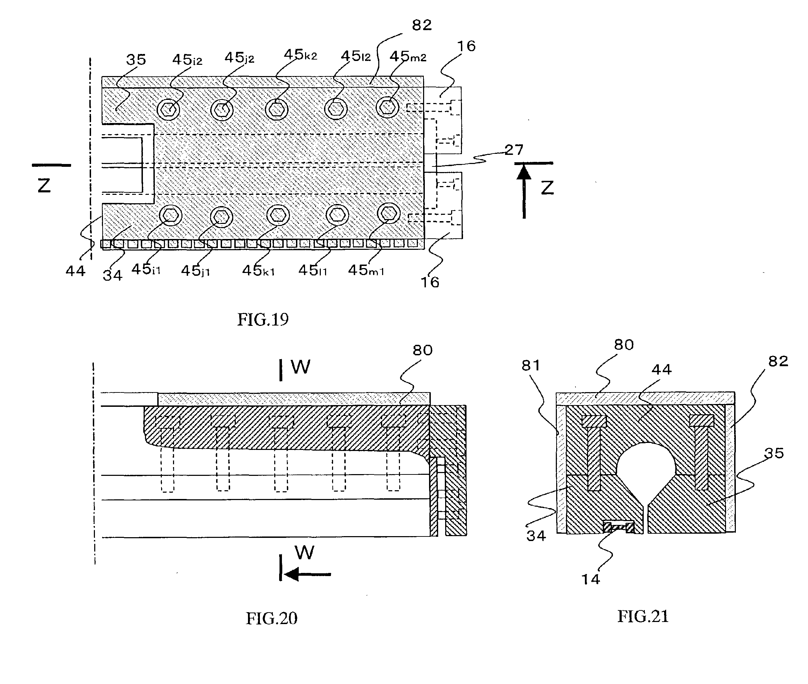

Figs. 19 to 21 shows an example in which a die is formed by three parts: a manifold-side member 44, a first lip 34, and a second lip 35. With reference to the figures, the manifold side member 44 is attached to the first lip 34 by point support members $45_{i1}$, $45_{j1}$, $45_{k1}$, $45_{l1}$, and $45_{m1}$, and to the second lip 35 by point support

members $45_{i2}$, $45_{j2}$, $45_{k2}$, $45_{l2}$, and $45_{m2}$. The die is heated by a sheet heater 80 disposed on top of the die, a sheet heater 81 disposed on the exterior surface of the first lip 34, and a sheet heater 82 disposed on the side surface of the die at the second lip 35.

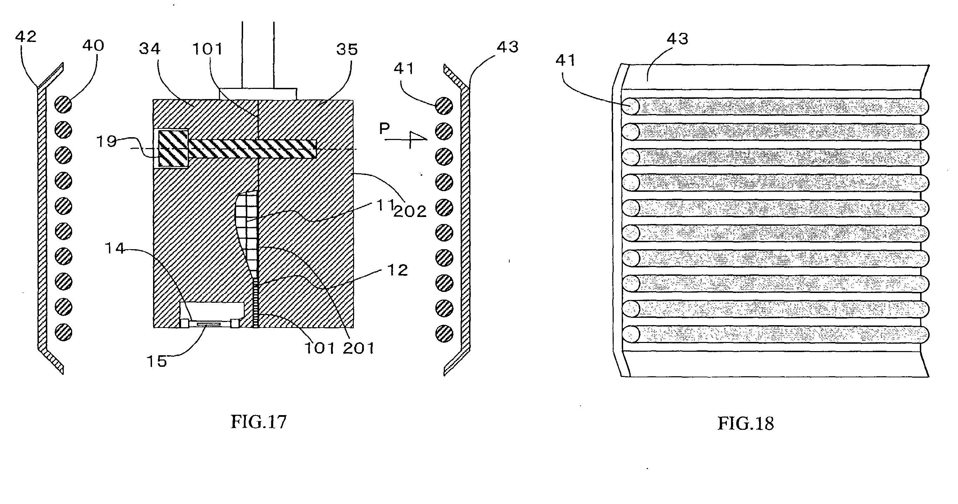

Another method for heating a die will be described below with reference to Fig. 17, which is a sectional view of a die. With reference to Fig. 17, far-infrared heaters 40 and 41 are arranged outside the exterior surfaces of first and second lips in such a manner that the exterior surfaces of the first and second lips uniformly receive radiation heat thereof. In addition, reflector plates 42 and 43 are disposed outside the far-infrared heaters 40 and 41, respectively. Fig. 18 is a perspective view of the far-infrared heaters 41 and the reflector plate 43 as seen from the direction shown by the arrow P in Fig. 17. As shown in Fig. 18, each of the far-infrared heaters 41 extends along the entire region of the lip members in the width direction thereof, and a plurality of far-infrared heaters 41 are arranged in the direction form the manifold toward the slit. When such a construction is applied, radiation heat applied by the far-infrared heaters is effectively absorbed by the die, and the exterior surfaces of the first and second lips are uniformly heated. In addition, heat radiation from the die uniformly occurs. Accordingly, the above-described construction is very preferable.

Third embodiment

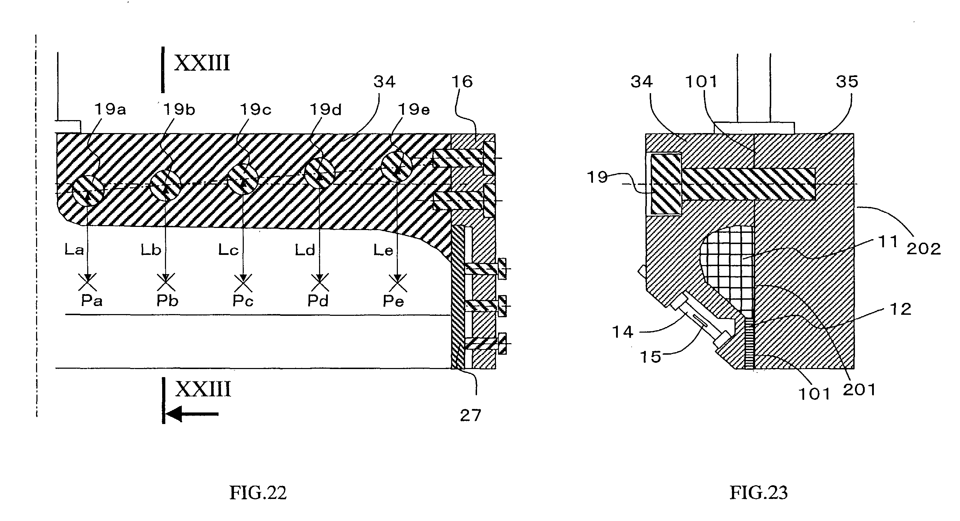

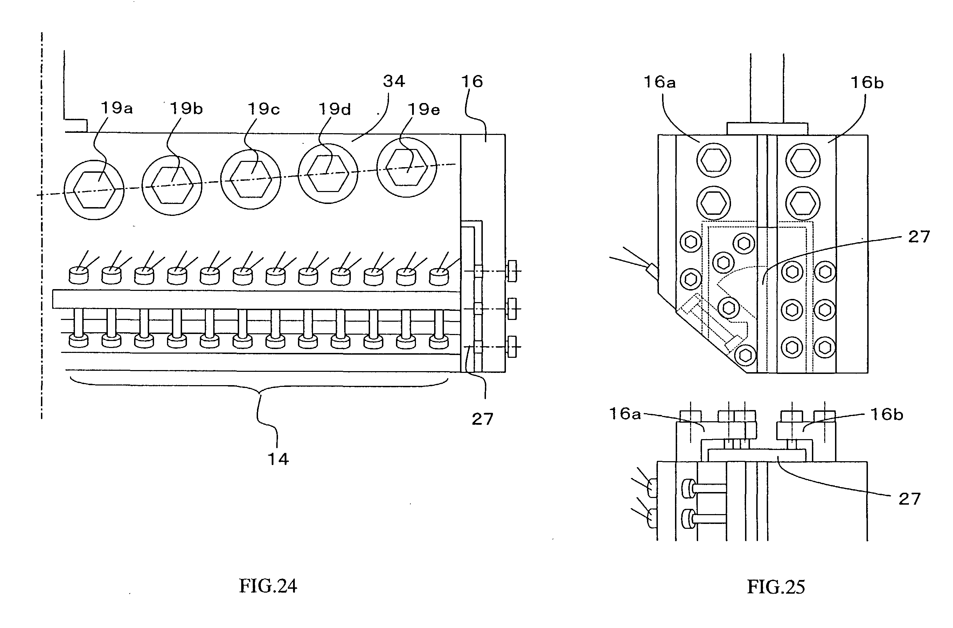

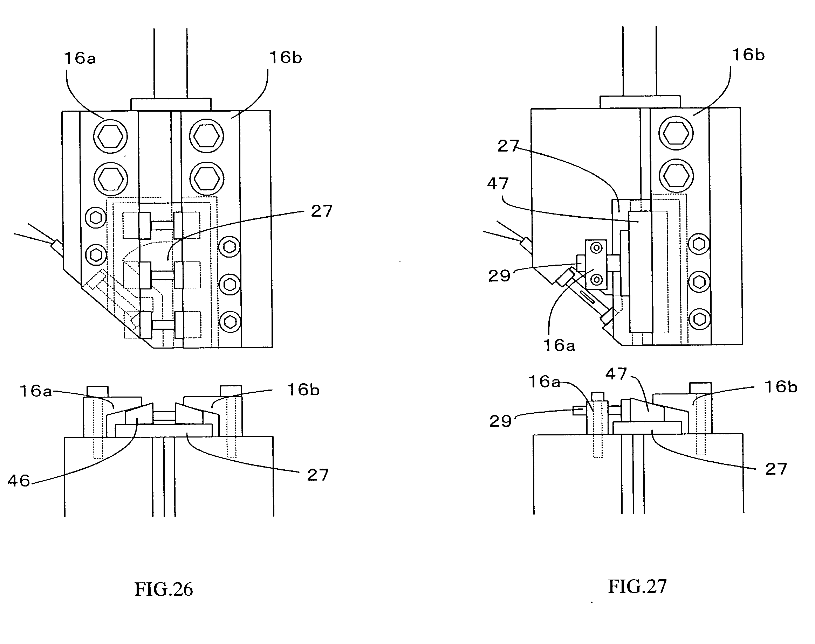

A third embodiment of the present invention will be described below. Fig. 22 is a schematic sectional view of a sheet manufacturing die according to the present invention which is cut along a plane parallel to the width direction thereof. Fig. 23 is a schematic sectional view of Fig. 22 cut along line XXIII-XXIII, that is, a line perpendicular to the width direction of the die. Fig. 24 is a schematic front view of the die, and Fig. 25 is a schematic side view of the die.

The die includes a first lip 34 and a second lip 35 which are joined in such a manner that they oppose each other. As shown in Fig. 24, the first lip 34 is provided with a plurality of adjustment members 14 which, are arranged in the width direction at a constant interval. As shown in Fig. 23, each of the adjustment members 14 is provided with a heater 15, of which the heat can be individually controlled. The heaters 15 receive current via electric lined from an electric power supply (not shown), so that heat is generated. Thus, heat expansion of the adjustment members 14 occurs and the tip portion of the first lip 34 is pressed, so that the distance between the first lip 34 and the second lip 35 at the tip thereof is reduced. The movement of the tip portion of the first lip 34 toward and away from the second lip 35 can be controlled by utilizing the heat expansion of the adjustment members 14 and controlling the heat applied thereto.

The first lip 34 and the second lip 35 are fixed to each other by a plurality of point support members 19 (19a, 19b, 19c, 19d, and 19e). The first lip 34 is provided with a manifold 11, which is a hollow portion for spreading the molten material in the width direction, and a slit 12 is formed continuously with the manifold 11 along the entire region of the die in the width direction. The surface roughness of a surface 101, which is a surface of the second lip 35 which faces the first lip 34, is such that the difference between the maximum height and the minimum height is 10 μm.

With reference to Fig. 22, the point support members 19a to 19e are positioned such that moments applied thereto are made even in the width direction. The moments are calculated by multiplying internal pressures Pa, Pb, Pc, Pd, and Pe, by distances La, Lb, Lc, Ld, and Le between barycenters of the internal pressures, which are marked by $\times$ in the figure, and the positions of the point support members 19a to 19e. More specifically, the point support members 19a to 19e are disposed at positions such that $Pa \times La \approx Pb \times Lb \approx Pc \times Lc \approx Pd \times Ld \approx Pe \times Le$ is satisfied. With reference to Fig. 23, each of the point support members evenly applies force to the first lip 34 and the second lip 35 at the center thereof in the plane perpendicular to the width direction. Accordingly, moment applied by the internal stress of the molten material is made approximately uniform over the width, so that the silt size is also made approximately uniform over the width.

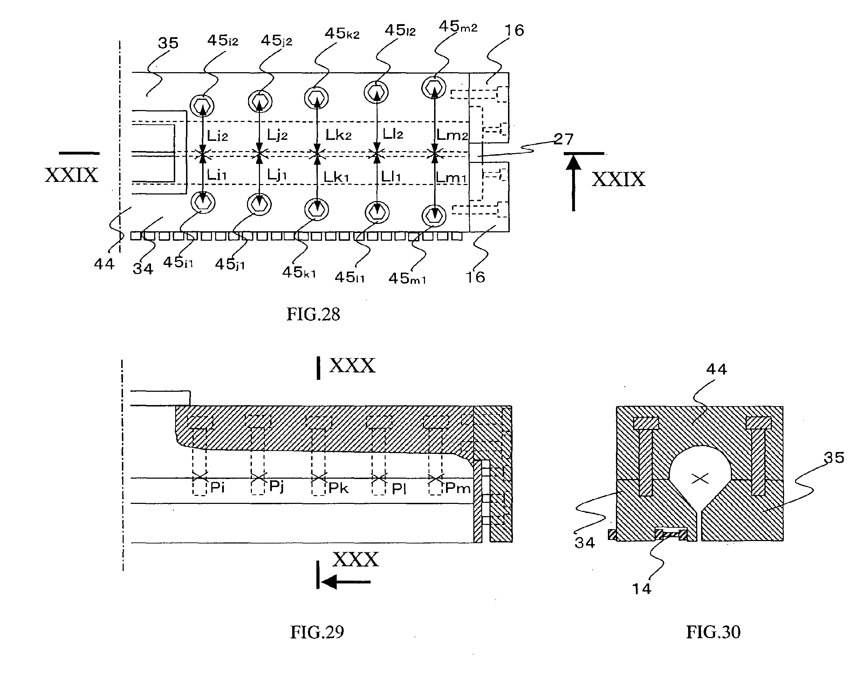

Figs. 28 to 30 shows an example in which a die is formed by three parts: a manifold-side member 44, a first lip 34, and a second lip 35. The manifold-side member is attached to the first lip 34 by point support members 45 ($45_{i1}$, $45_{j1}$, $45_{k1}$, $45_{l1}$, and $45_{m1}$), and is attached to the second lip 35 by point support members 45 ($45_{i2}$, $45_{j2}$, $45_{k2}$, $45_{l2}$, and $45_{m2}$). The point support members $45_{i1}$ to $45_{m1}$ are positioned such that moments applied thereto are made even in the width direction. The moments are calculated by multiplying internal pressures Pi, Pj, Pk, P1, and Pm, by distances Li1, Lj1, Lk1, Ll1, and Lm1 between barycenters of the internal pressures, which are marked by $\times$ in the figure, and the positions of the point support members $45_{i1}$, $45_{j1}$, $45_{k1}$, $45_{l1}$, and $45_{m1}$. More specifically, the point support members $45_{i1}$, $45_{j1}$, $45_{k1}$, $45_{l1}$, and $45_{m1}$ are disposed at positions such that $Pi \times Li1 \approx Pj \times Lj1 \approx Pk \times Lk1 \approx Pl \times Ll1 \approx Pm \times Lm1$ is satisfied. Similarly, the point support members $45_{i2}$ to $45_{m2}$ are positioned such that moments applied thereto are made even in the width direction The moments are calculated by multiplying internal pressures Pi, Pj, Pk, P1, and Pm, by distances Li2, Lj2, Lk2, Ll2, and Lm2 between barycenters of the internal pressures, which are marked by $\times$ in the figure, and the positions of the point support members $45_{i2}$, $45_{j2}$, $45_{k2}$, $45_{l2}$, and $45_{m2}$. More specifically, the point support members $45_{i2}$, $45_{j2}$, $45_{k2}$, $45_{l2}$, and $45_{m2}$ are disposed at positions such that $Pi \times Li2 \approx Pj \times Lj2 \approx Pk \times Lk2 \approx P1 \times Ll2 \approx Pm \times Lm2$ is satisfied.

As shown in Figs. 22 and 25, a sealing member 27, which is provided for sealing the molten material, is strongly pressed against the molten material by a pressing member 16a, which is attached to the first lip 34, and a pressing member 16b, which is attached to the second lip 35. The pressing members 16a and 16b are separately formed from the following reason. That is, when a single pressing member is strongly attached to both the first and second lips 34 and 35, the first and the second lip 34 and 35 are restrained by the pressing member. Thus, when the slit size of the die is increase due to the internal pressure of the molten material, the slit size is increased by a smaller amount at the end portions compared to the amount by which the slit size at the middle portion is increased. Thus, the operation of making the slit size uniform over the width of the present invention cannot be adequately performed. Accordingly, the pressing member 16a and the pressing member 16b are separately formed.

Fig. 26 shows a modification of a construction of the end portions of a die according to the present invention. As shown in Fig. 26, a pressing member 16a attached to the first lip and a pressing member 16b attached to the second lip have a tapered'shaped, and the sealing member 27 is pressed by using tapered members 46. Each of the tapered members 46 has the shape corresponding to the shape of the pressing members 16a and 16b, and a pressing force applied to the sealing member 27 can be easily adjusted by adjusting the distance between the tapered members 46. Accordingly, leakage of the molten material is more reliably prevented, and the adjustment of the thickness distribution can be more smoothly performed.

Fig. 27 shows another modification of a construction of the end portions of a die according to the present invention. As shown in Fig. 27, a pressing member 16b attached to the second lip has a tapered shape, and a pressing member 16a attached to the first lip is provided with a bolt 29. A pressing force applied to the sealing member 27 can be more easily adjusted by adjusting the position of a tapered member 47 relative to the pressing member 16a using the bolt 29. Accordingly, leakage of the molten material is more reliably prevented, and the adjustment of the thickness distribution can be more smoothly performed.

Example 1

1. Manufacturing of die

A die constructed as shown in Fig. 4 was manufactured, and a sheet manufacturing apparatus was constructed as shown in Figs. 2, 3, and 8. The width of the slit was 1m, and the slit size, that is, the distance between the lips at the tip portions thereof, was 2 mm, and the length from the manifold portion to the tip of the lips was 50 mm. The cross-section of the slit in a plane perpendicular to the width direction at the midsection of the die was 1/36 of the cross-section of the manifold. Fixing bolts 19 for fixing the first lip and the second lip were arranged along the width of the die in a manner parallel to the tip portion of the die. The die was formed of SUS 630 according to JIS, which is a stainless steel. The minimum distance between the exterior surface of the first and the second lips and the manifold was within 195 mm to 213 mm. With respect to each of the first and the second lips, the distance between the surface facing the other lip and the surface at the side of the surface facing the other lip was measured at five points, and the average thereof was calculated. Accordingly, the average thickness of the first and the second lips was calculated as 210 mm. The flatness, that is, the difference between the maximum and minimum heights in the width direction, of the surface of the second lip which faces the first lip was measured by a coordinate measuring machine disposed on a precision table by sliding a dial gauge in the width direction and determining the maximum displacement. The measurement was performed at five positions with intervals of 10 mm in the direction from the manifold toward the tip, and all of the obtained flatnesses were within 9 $\mu$m. The first lip was provided with adjustment members which were arranged in the width direction thereof at intervals of 20 mm. Sealing members formed of Vespel having a thickness of 10 mm were used, and the coefficient of static friction of the Vespel relative to JIS-SUS630 was 0.2 at room temperature and 0.1 at 300°C. The coefficient of static friction was determined by the method described above with reference to Fig. 31, by constructing the inclined member with JIS-SUS630.

2. Assembly and heating of the die

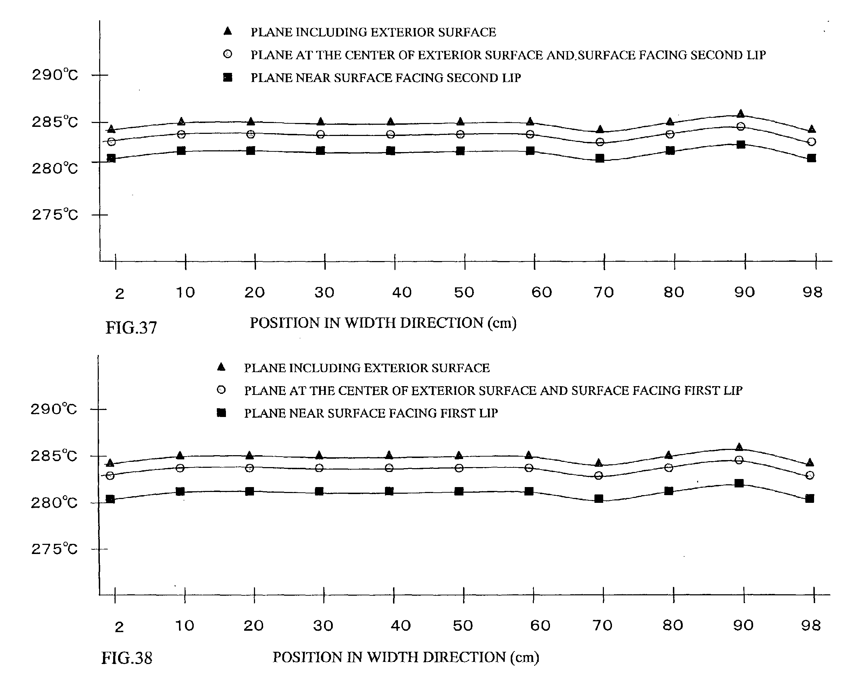

With reference to Fig. 4, the surface of the second lip which faces the first lip is denoted by 201, the surface opposite to the surface 201 is denoted by 202, and the surface of the first lip which faces the second lip is denoted by 101. In the process of assembling the die, the second lip was first disposed on a face plate in such a manner that the surface 201 was at the top and surface 202 was at the bottom. Then, the first lip was disposed on the second lip in such a manner that the surface 101 faces the surface 201 of the second lip, and then the first lip and the second lip were fixed by the fixing bolts 19. Accordingly, the die was easily assembled at high accuracy. The surfaces 201 and 202 of the second lip were formed to be parallel to each other. Since the internal pressure of the molten material was determined to be $9.8 \times 10^5$ Pa (10 kgf/cm$^2$), a pressing force applied to the sealing members was set to $3.92 \times 10^6$ (40 kgf/cm$^2$). First, the pressure measuring sheet Prescale was used for determining the torque to be applied to the bolts for generating the above-described pressure, and then the sealing members were fixed by the bolts at the determined torque. At this time, it was confirmed that the sealing members deformed elastically. Then, the die was heated to 280 °C by heaters (eleven heaters, each having the length of 91 mm, were arranged without providing gaps between there), and was installed in the sheet manufacturing device constructed as shown in Fig. 8. The die and the heaters was covered by a felt-type heat insulator formed of alumina fiber Rubiel (trade name of Nichias Corporation). The temperature distribution of the heated die was measured by K-type thermocouples, that is, chromel-alumel thermocouples, at multiple positions inside the die. More specifically, with respect to the second lip, the temperature was measured at eleven points along the width on each of the following three planes: the plane including the exterior surface, the central plane between the exterior surface and the surface facing the first lip, and the plane positioned 5 mm away from the surface facing the first lip. The temperature of the fist lip was similarly measured at eleven points along the width on each of the three planes. Accordingly, with respect to each of the first and the second lips, the temperature thereof was measured at thirty-three points in total. However, since the temperatures of the positions inside the manifold cannot be measured, the temperature at points 5 mm away from the manifold toward outside was measured in instead of the measuring points disposed inside the manifold. Since the temperatures at positions close to the end portions of the die were lower due to the heat dissipation from there, the temperatures of the heaters disposed close to the ends were set to a temperature 5°C higher than the temperature of the heaters disposed at other parts. As a result, temperature gradient between the second lip in the direction from the surface facing the first lip toward the exterior surface was 5°C, and the temperature variation in the width direction on each of the planes parallel to the interface between the first and the second lips was reduced to ±1°C. Fig. 37 is a graph showing the temperature distributions in the width direction of the first lip on the above-described three planes, and Fig. 38 is a graph showing the temperature distributions in the width direction of the second lip of the above-described three planes. The temperature distributions of the exterior surfaces of the first and second lips were determined as follows. With respect to each lip, the surface temperature was measured at three positions (a position 30 mm from the tip end, a position 20 mm from the opposite end, and a position at the center of the top end and the opposite end) along each of the five lines which evenly divides the lip to six parts in the width direction (with intervals of 167 mm). The average of the above-described three positions was determined as the surface temperature at the corresponding position in the width direction. As a result, the average temperature of the five positions in the width direction was 284°C, and the difference between the maximum value and the minimum value was 2°C. The temperature of the molten material, which was a polyethylene terephthalate polymer, was measured after it was extruded from the die in the form of a sheet, and was determined as 280°C. In addition, room temperature was 25°C.

3. Forming of sheet

By using the manufacturing apparatus which was constructed as described above, the molten material was extruded from the die at the throughput of 200 kg/hr, and was wound around a cooling roller which was rotated at 5 m/min. Then, an electrode was disposed above the cooling roller, and voltage of 3 kV was applied. An image analyzing device was activated so that the variation in paths h could be measured, and the rotational speed of the cooling roller was gradually increased. During the time in which the rotational speed was increased, the position of the electrode and the voltage applied thereto was adjusted, and the thickness of the sheet was measured and adjusted. In addition, variation in paths h was also measured and adjusted by adjusting the temperature of the side plate of the die. The thickness of the sheet on the cooling roller was 150 μm at the product portion and 500 μm at the end portions. In order that the sheet lands on the cooling roller at the top point thereof, the die was disposed at a position such that the tip portion of the slit was 90 mm away toward the direction opposite to the winding direction, and 20 mm away in the upward direction from the top point. While the variation in paths h was adjusted, the above-described landing points A and B were also adjusted such that the difference thereof was 2 mm. The temperature of the product portion was adjusted to 289°C and the temperature of the end portions was adjusted to 286°C based on the results of measurement by the thermocouples disposed close to the manifold, and the variation in paths h was adjusted to 1.3 mm. A difference of the angle $\psi$ of center portion of the sheet and end portion of the sheet is 11°. As a result, the distance between the electrode and the sheet was reduced to 1.9 mm, and the winding speed of the sheet was increased to 91 m/min when the voltage applied to the electrode was 7.0 kV. Accordingly, a sheet having an acceptable thickness distribution and smooth surface was obtained.

4. Evaluation of initial thickness distribution

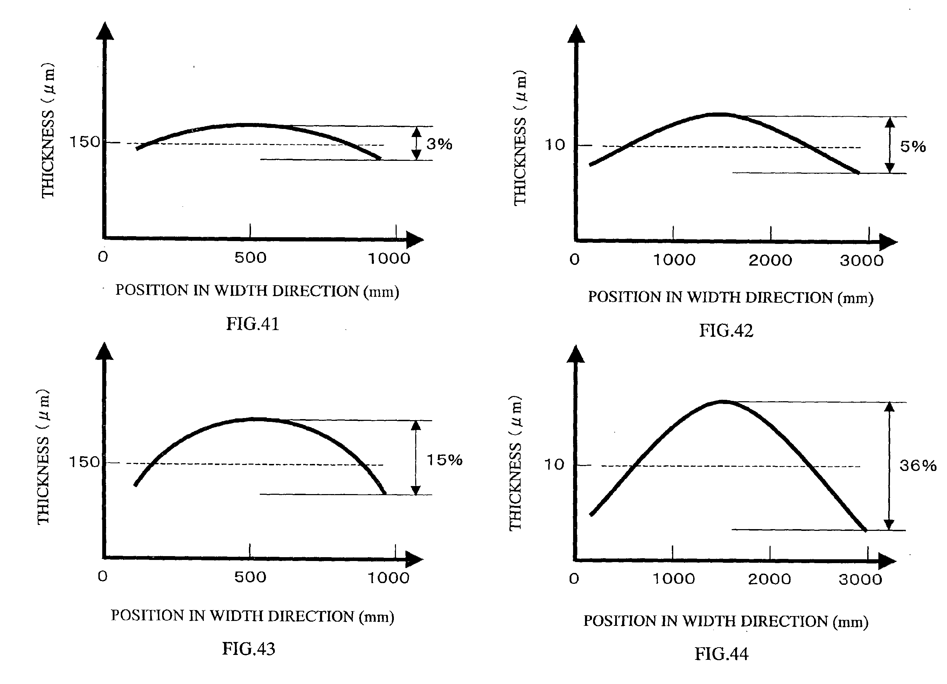

Next, in order to evaluate the initial thickness distribution, the thickness of the sheet was measured. Fig. 41 shows an initial thickness distribution of the sheet which was measured after the sheet was extruded from the die and solidified on the cooling roller. The average thickness was 150 μm, and the thickness variation was approximately 5 μm, that is, 3% of the average thickness. As is understood from Fig. 41, a sheet of which the midsection was relatively convex was obtained. Fig. 42 shows the thickness distribution after the longitudinal drawing and the lateral drawing were performed. The average thickness was 10 μm and the thickness variation was 5%. As is understood from Fig. 42, a sheet of which the midsection was relatively convex was obtained.

5. Sheet manufacturing operation

Then, heat applied to adjustment members disposed in the first lip were controlled by changing duty rate (ON-rate) of pulse waves applied to the heaters provided on the adjustment members, base on the thickness distribution measured by the thickness gauge 8 after the longitudinal and lateral drawing processes were performed. The above-described on-rate is defined as follows. That is, in the case in which a heater is on for five seconds and off for five seconds in ten seconds, the on-rate is defines to be 50%. The on-rate was controlled so as to make the difference between the measured thickness distribution and the desired thickness distribution closer to zero. More specifically, the lengths of the adjustment members were adjusted utilizing the heat expansion thereof and the tip portion of the first lip was moved toward and away from the second lip, so that the slit size was adjusted. Accordingly, the thickness distribution of the sheet was adjusted. As a result, thickness variation of the obtained sheet after the drawing process was reduced to 1.5%, and a flat sheet was obtained. The sheet having a width of 3 m was once wound around an intermediate winder connected to the sheet manufacturing apparatus. Then, the end portions of the sheet were cut off, and the middle portion of the sheet was cut at the center thereof into two sheets, which were wound into two sheet rolls having the core diameter of 168 mm. Each of the obtained sheets had a width of 1.2 m and a length of 10,000 m, and each of the sheet rolls formed by winding around the sheets had a length of 1.2 m and a diameter of 453 mm. In addition, variation in diameter of each sheet roll was 200 $\mu$m in the width direction of the sheet, and sheet rolls having a high dimensional accuracy were obtained. A first sheet roll of a sheet for magnetic storage medium which has a sufficiently high quality was obtained in an hour after the sheet was manufactured. The time for forming the sheet in the shape of a product (one hour) excludes the time before the sheet having the width of 3 m was wound around the intermediate winder, and is determined as the time interval in which the sheet wound around the intermediate winder was formed in the shape of a sheet roll.

Example 2

1. Manufacturing of die

A die constructed as shown in Figs. 9 to 12, 22 to 27, and 34 and 35 was manufactured, and a sheet manufacturing apparatus shown in Figs. 2, 3, and 8 was constructed. Parts different from Example 1 will be described below.

As shown in Figs. 22 to 25, fixing bolts 19 were arranged along a line inclined in the width direction of the die. As shown in Fig. 27, each of the end portions of the molten material was sealed by pressing the sealing member 27 utilizing the wedge effect using a pressing bolt 29.

2. Assembly and heating of the die

Since the internal pressure of the molten material was determined to be $9.8 \times 10^5$ Pa (10 kgf/cm$^2$), a pressing force applied to the sealing members was set to $3.92 \times 10^6$ (40 kgf/cm$^2$). First, the pressure measuring sheet Prescale was used for determining the torque to be applied to the bolts for generating the above-described pressure, and then the sealing members were fixed by the bolts at the determined torque. At this time, it was confirmed that the sealing members deformed elastically. Since each of the sealing members could easily be pressed by operating the pressing bolt 29, the pressing force was evenly and effectively applied to the pressing member.

3. Forming of sheet

A sheet was formed using the manufacturing apparatus which was constructed as described above. The thickness of the sheet on the cooling roller was 110 $\mu$m at the product portion and 480 $\mu$m at the end portions. In order that the sheet lands on the cooling roller at the top point thereof, the die was disposed at a position such that the tip portion of the slit was 85 mm away toward the direction opposite to the winding direction, and 18 mm away in the upward direction from the top point. While the variation in paths h was adjusted, the above-described landing points A and B were also adjusted such that the difference thereof was 3 mm. The temperature of the product portion was adjusted to 290°C and the temperature of the end portions was adjusted to 289°C based on the results of measurement by the thermocouples disposed close to the manifold, and the variation in paths h was adjusted to 0.6 mm. A difference of the angle $\psi$ of center portion of the sheet and end portion of the sheet is 6°. As a result, the distance between the electrode and the sheet was reduced to 1.3 mm, and the winding speed of the sheet was increased to 103 m/min when the voltage applied to the electrode was 6.4 kV. Accordingly, a sheet having an acceptable thickness distribution and smooth surface was obtained.

4. Evaluation of initial thickness distribution

Next, in order to evaluate the initial thickness distribution, the thickness of the sheet was adjusted. The average thickness was 110 $\mu$m, and the thickness variation was approximately 3 $\mu$m, that is, 2.7% of the average thickness. The sheet was relatively convex at the midsection thereof. In addition, after the drawing process, the average thickness was 9 $\mu$m and the thickness variation was 4.5%. The sheet was relatively convex at the midsection thereof.

5. Sheet manufacturing operation

Then, the thickness distribution was measured and automatically adjusted. Thickness variation of the obtained sheet after the drawing process was reduced to 1.7%, and a flat sheet was obtained. The sheet having a width of 3 m was once wound around an intermediate winder connected to the sheet manufacturing apparatus. Then, the end portions of the sheet were cut off, and the middle portion of the sheet was cut at the center thereof into two sheets, which were wound into two sheet rolls having the core diameter of 168 mm. Each of the obtained sheets had a width of 1.2 m and a length of 10,000 m, and each of the sheet rolls formed by winding around the sheets had a length of 1.2 m and a diameter of 407 mm. In addition, variation in diameter of each sheet roll was 180 μm in the width direction of the sheets, and sheet rolls having a high dimensional accuracy were obtained.

Example 3

A die similar to the die of Example 2 was manufactured, and a sheet was formed using a manufacturing apparatus under the same conditions as in Example 2. The thickness of the sheet on the cooling roller was 110 μm at the product portion and 480 μm at the end portions. In order that the sheet lands on the cooling roller at the top point thereof, the die was disposed at a position such that the tip portion of the slit was 85 mm away toward the direction opposite to the winding direction, and 18 mm away in the upward direction from the top point. While the variation in paths h was adjusted, the above-described landing points A and B were also adjusted such that the difference thereof was 3 mm. The temperature of the product portion was adjusted to 290°C and the temperature of the end portions was adjusted to 288°C based on the results of measurement by the thermocouples disposed close to the manifold, and the variation in paths h was adjusted to 0.8 mm. A difference of the angle ψ of center portion of the sheet and end portion of the sheet is 8°. As a result, the distance between the electrode and the sheet was reduced to 1.5 mm, and the winding speed of the sheet was increased to 101 m/min when the voltage applied to the electrode was 6.6 kV. Accordingly, a sheet having an acceptable thickness distribution and smooth surface was obtained.

Comparative Example 1

1. Manufacturing of die

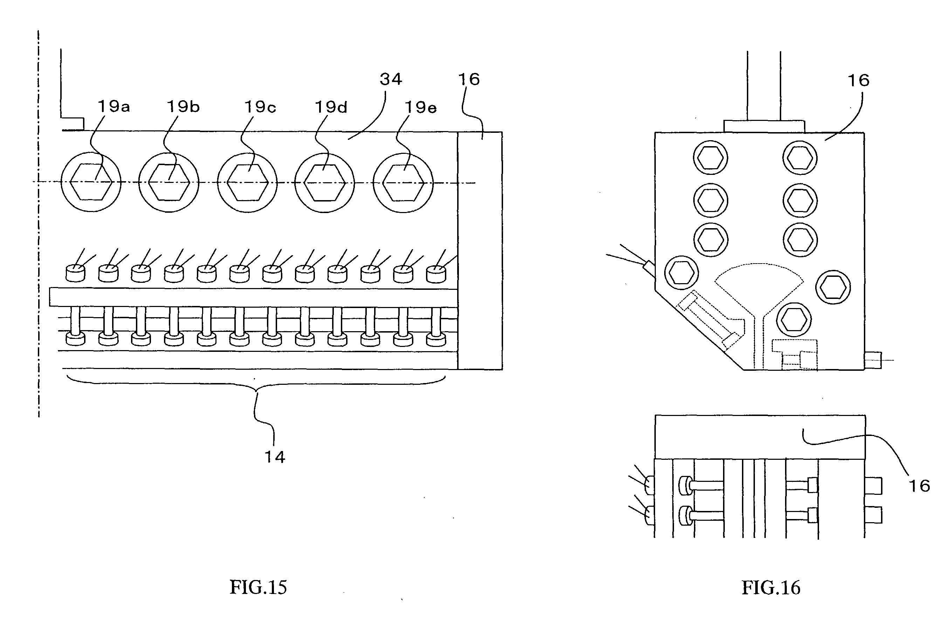

A die constructed as shown in Figs. 6 and 13 to 16 was manufactured, and a sheet manufacturing apparatus was constructed as shown in Fig. 5. The width of the slit was 1m, and the slit size, that is, the distance between the lips at the tip portions thereof, was 1.4 mm, and the length from the manifold portion to the tip of the lips was 50 mm. The cross-section of the slit in a plane perpendicular to the width direction at the midsection of the die was 1/36 of the cross-section of the manifold. The die was formed of SUS 630 according to JIS, which is a stainless steel. Fixing bolts 19 for fixing a first lip and a second lip to each other were arranged along a line parallel to the tip portion of the die in the width direction thereof. The first lip was provided with adjustment members which were arranged in the width direction at intervals of 20 mm. In addition, the second lip was provided with manually operated adjustment members, which have a similar construction as differential screws, and which were capable of fine adjustments. Side plates 16 were strongly fixed to the first and the second lips at the end portions thereof.

2. Assembly and heating of the die

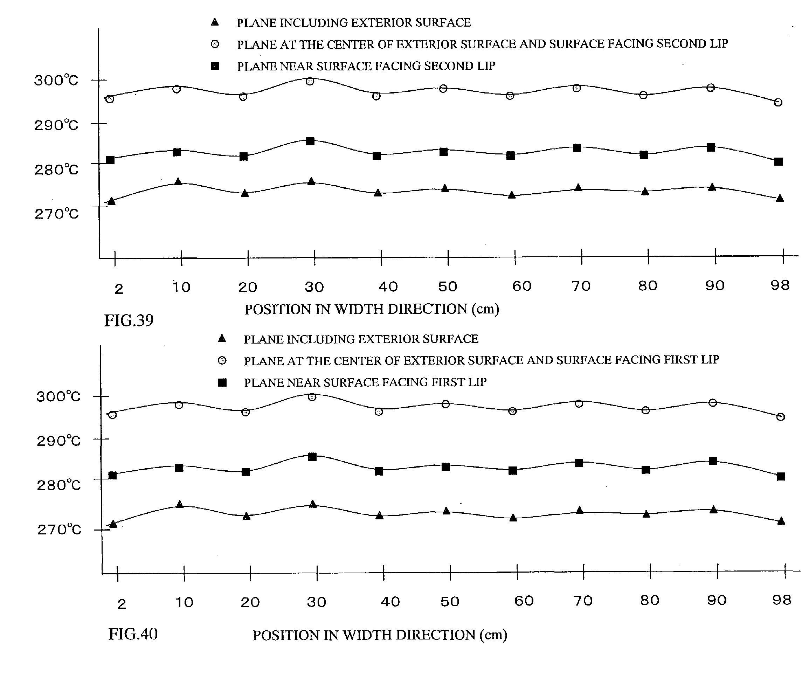

The second lip was first disposed on a face plate, and then the first lip was disposed on the second lip and the two lips were fixed to each other by fixing members. The internal pressure of the molten material was determined to be $17.6 \times 10^5$ Pa (18kgf/cm2), a pressure force applied to side plates 16 was set to $3.92 \times 10^6$ (40kgf/cm2). The die was heated to 280 °C by heaters (eleven heaters, each having the length of 91 mm, were arranged without providing gaps between there), and was installed in the sheet manufacturing device constructed as shown in Fig. 5. The temperature distribution of the heated die was measured by K-type thermocouples, that is, chromel-alumel thermocouples, at multiple positions inside the die. More specifically, with respect to the second lip, the temperature was measured at eleven points along the width on each of the following three planes: the plane including the exterior surface, the central plane between the exterior surface and the surface facing the first lip, and the plane positioned 5 mm away from the surface facing the first lip. The temperature of the first lip was similarly measured at eleven points along the width on each of the three planes. Accordingly, with respect to each of the first and the second lips, the temperature thereof was measured at thirty-three points in total. However, since the temperatures of the positions inside the manifold cannot be measured, the temperature at points 5 mm away from the manifold toward outside was measured in instead of the measuring points disposed inside the manifold. As a result, temperature gradient on the second lip in the direction from the surface facing the first lip toward the exterior surface was approximately 25°C, and was not uniform. In addition, the temperature variation in the width direction on each of the planes parallel to the interface between the first and the second lips was reduced to ±4.5°C. Fig. 39 is a graph showing the temperature distributions in the width direction of the first lip on the above-described three planes, and Fig. 40 is a graph showing the temperature distributions in the width direction of the second lip of the above-described three planes. The temperature distributions of the exterior surfaces of the first and second lips were determined as follows. With respect to each lip, the surface temperature was measured at three positions (a position 30 mm from the tip end, a position 20 mm from the opposite end, and a position at the center of the top and the opposite end) along each of the five lines which evenly divides the lip to six parts in the width direction (with intervals of 167 mm). The average of the above-described three positions was determined as the surface temperature at the corresponding position in the width direction. As a result, the average temperature of the five positions in the width direction was 272°C, and the difference between the maximum value and the minimum value was 10°C. The temperature of the molten material, which was a polyethylene terephthalate polymer, was measured after it was extruded from the die in the form of a sheet, and was determined as 280°C. In addition, room temperature was 25°C.

3. Forming of sheet

A sheet was formed under the same manufacturing conditions as Example 1. The thickness of the sheet was 35 µm at the product portion and 3200 µm at the end portions. A difference of the angle ψ of center portion of the sheet and end portion of the sheet is 24° and the variation in paths h was 21 mm, and the electrode could not be disposed closer to the sheet than 6.2 mm. The winding speed of the sheet was 40 m/min.

4. Evaluation of initial thickness distribution

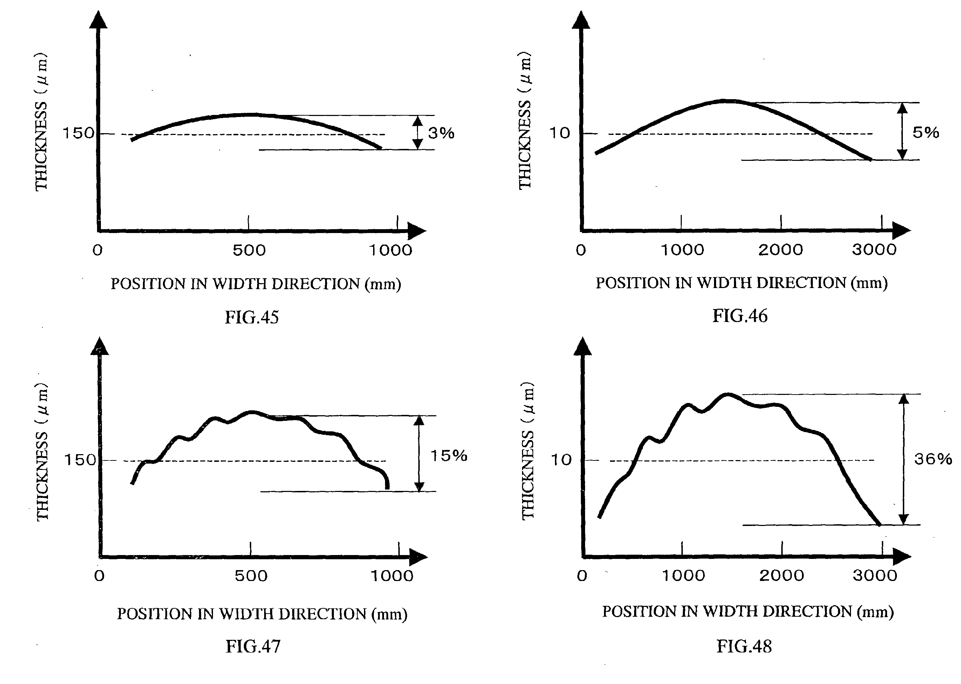

Fig. 47 shows the initial thickness distribution of the sheet which is extruded from the die and solidified on the cooling roller. Since the side plates were strongly fixed to the first and second lips, the end portions of the die was deformed differently from the midsection thereof. The obtained sheet was convex at the midsection thereof, and thickness variation of the sheet in the width direction was 13%. In addition, concavities and convexities, which conceivably occurred due to the temperature variation of the die, were also observed. Fig. 48 shows the thickness distribution after the longitudinal drawing and the lateral drawing were performed. Thickness variation in the width direction was 36%. As is understood from the figure, the sheet was convex at the midsection thereof, and the degree of concavities and convexities observed before the drawing processes were enlarged.

5. Sheet manufacturing operation

Then, the thickness distribution of the sheet in the width direction was adjusted based on the data of thickness distribution after the longitudinal and lateral drawing process was performed using the manually operated adjustment members.

The operator adjusted the thickness distribution until the thickness variation was reduced to 5%, and the operation took six hours. The thickness distribution was then automatically controlled by utilizing the heat expansion of the adjustment members of the first lip and controlling heat applied to the heaters disposed in the adjustment members. Heat applied to the heaters were controlled similarly as described above by controlling the on-rate such that the difference between the obtained data of thickness distribution and the desired thickness distribution converges to zero. Accordingly, the thickness distribution of the sheet was adjusted by moving the tip portion of the first lip toward away from the second lip. As a result, thickness variation of the obtained sheet after the drawing process was reduced to 3.0%, and a flat sheet was obtained. The sheet having a width of 3 m was once wound around an intermediate winder connected to the sheet manufacturing apparatus. Then, the end portions of the sheet were cut off, and the middle portion of the sheet was cut at the center thereof into two sheets, which were wound into two sheet rolls having the core diameter of 168 mm. Each of the obtained sheets had a width of 1.2 m and a length of 10,000 m, and each of the sheet rolls formed by winding around the sheets had a length of 1.2 m and a diameter of 151 mm. In addition, variation in diameter of each sheet roll was 850 µm in the width direction of the sheets, and sheet rolls having a relatively large diameter variation were obtained. A first sheet roll of a sheet for magnetic storage medium which has a sufficiently high quality was obtained in twenty-three hours after the sheet was manufactured. The time for forming the sheet in the shape of a product (twenty-three hours) excludes the time before the sheet having the width of 3 m was wound around the intermediate winder, and is determined as the time interval in which the sheet wound around the intermediate winder was formed in the shape of a sheet roll.

Comparative example 2

A sheet was formed under the same conditions as in Example 2. The thickness of the sheet was 42 µm at the product portion and 3500 µm at the end portions. The die was disposed such that the landing point of the sheet is on the top point of the cooling roller. The sheet landed on the cooling roller at a position 64 mm away from the central line in the horizontal direction. A difference of the angle ψ of center portion of the sheet and end portion of the sheet is 28° and the variation in paths h was 26 mm, and the electrode could not be disposed closer to the sheet than 7.0 mm. In addition, the winding speed of the sheet could not be increased more than around 32 m/min.

Comparative example 3

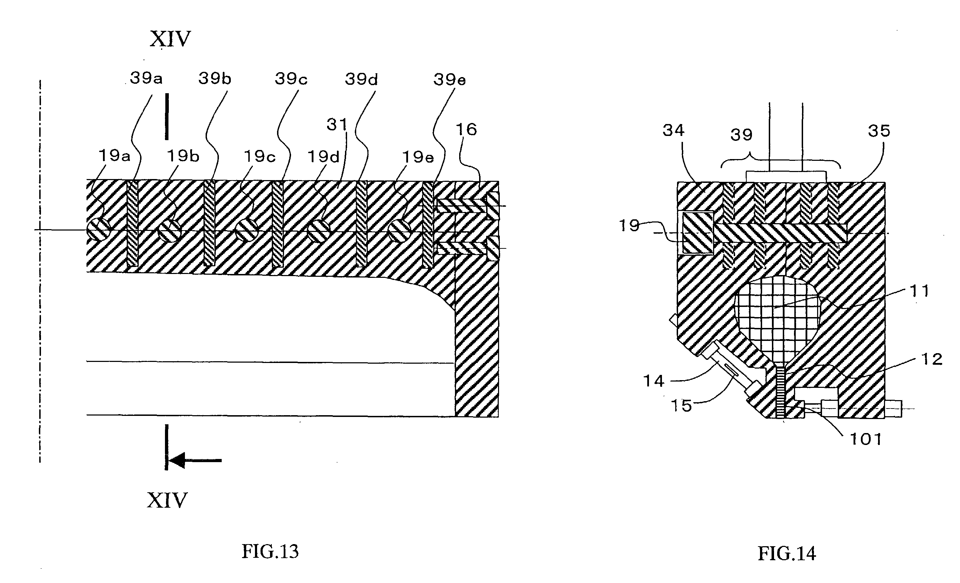

A sheet was formed under the same conditions as in Example 2. As shown in Figs. 13 to 16, each of the lips was provided with a concavity for forming a manifold and adjustment members, and fixing bolts of the lips were fixed parallel to the bottom surface of the lips. Cartridge heaters were used for applying heat, and temperatures of the cartridge heaters disposed in the middle portion and end portions were adjusted together. Surface flatness of each lip was 45 μm, and side plates were strongly fixed to the lips by bolts without using sealing members. Then, a sheet was manufactured using the die having the above-described construction. The obtained sheet was convex at the midsection thereof, and thickness variation of the sheet in the width direction was 19%. In addition, concavities and convexities, which conceivably occurred due to the temperature variation of the die, were also observed. The thickness variation after the longitudinal drawing and the lateral drawing were performed was 37%, and it took six hours to adjust the thickness distribution.

## Claims

**1.** A sheet manufacturing method comprising the steps of:

> extruding a molten material from a slit formed in a die in the form of a sheet; and
> solidifying the sheet by bringing the sheet into contact with a roller,

> wherein, in the extruding step, the sheet is formed such that the end portions thereof in the width direction are 2 to 80 times thicker than the middle portion thereof, and
> wherein the variation h in paths along which different parts of the molten material move from the die to the roller in the width direction is 15 mm or less.

**2.** A sheet manufacturing method according to Claim 1,
> wherein, in the extruding step, the sheet is formed such that the end portions thereof in the width direction are 3 to 30 times thicker than the middle portion thereof, and
> wherein the variation h in paths along which different parts of the molten material move from the die to the roller in the width direction is 5 mm or less.

**3.** A sheet manufacturing method according to Claim 1, wherein the temperature of the molten material at the end portions of the slit is adjusted independently of the temperature thereof at the middle portion of the slit.

**4.** A sheet manufacturing method according to Claim 1, wherein the temperature of the molten material at the end portions of the slit is set to a lower value than the temperature thereof at the middle portion of the slit.

**5.** A sheet manufacturing method according to Claim 1, wherein the variation L of landing points at which different parts of the molten material land on the roller in the rotational direction thereof in the width direction is 10 mm or less.

**6.** A sheet manufacturing method according to Claim 1, wherein the rear end point of landing points, at which different parts of the molten material land on the roller, in the rotational direction of the roller is disposed within 75 mm from the top point of the roller toward either sides along the circumference of the roller.

**7.** A sheet manufacturing method according to Claim 1, wherein the slit is disposed in the rear region of a vertical line passing through the rotational axis of the roller in the rotational direction thereof.

**8.** A sheet manufacturing method according to Claim 1, wherein an angle between the extruding direction of the molten material from the slit and the tangential direction of the roller at the rear end point of landing points, at which different parts of the molten material land on the roller, in the rotational direction of the roller is in the range of 30 to 75°.

**9.** A sheet manufacturing method according to Claim 1, wherein, in the extruding step, the die is heated so that the temperature variation of the die in the width direction of the sheet is within 3% of the absolute value of a difference between the temperature of the molten material which is extruded from the slit and room temperature.

**10.** A sheet manufacturing die comprising:

> a slit from which a molten material is extruded in the form of a sheet;
> heating means which heats the molten material at least the middle portion the slit; and
> heating means which adjusts the temperature of the molten material at the end portions of the slit independently of the temperature thereof at the middle portion of the slit.

**11.** A die according to Claim 10, wherein the heating means comprises a flow passage which transfers a fluid used for heat exchange inside the die.

**12.** A die according to Claim 10, wherein the slit is formed between a pair of lip members, and wherein the heating means heats at least one of the lip members such that the temperature variation of the lip member in the width direction is within 3% of the absolute value of a difference between the temperature of the molten material which is extruded from the slit and room temperature.

13. A die according to Claim 10, wherein the slit is formed between a pair of lip members, at least one of the lip members being provided with the heating means, and wherein the heating means comprises a heater which satisfies the following condition:

$$L0 < L < (1.2 \times L0)$$

wherein L0 is the length of the lip member to be heated in the width direction, and L is the length of the heater in the width direction.

14. A die according to Claim 10, wherein the slit is formed between a pair of lip members, at least one of the lip members being provided with the heating means, and wherein the heating means comprises N heaters (N = 2, 3, ...), of which the temperatures are individually adjusted, and which is arranged in the width direction of the lip member in such a manner that the following conditions are satisfied:

$$dn \leq t,$$

$$(Ln / dn) \geq 0.1,$$

$$L0 < La < (1.2 \times L0)$$

wherein n = 1, 2, ... N-1, L0 is the length of the lip member to be heated in the width direction, $Ln$ is the length of the $n^{th}$ heater from one end in the width direction, $dn$ is the size of the gap between the $n^{th}$ and $(n+1)^{th}$ heaters from one end, t is the average thickness of the lip member to be heated, and La is the sum of lengths of the N heaters and sizes $dn$ of the gaps between there.

15. A die according to Claim 10, wherein the slit is formed between a pair of lip members, and wherein heating means heats at least one of the lip members from the outside.

16. A die according to Claim 14, wherein the N heaters are connected to each other with thermal conductors.

17. A die according to Claim 10, wherein the heating means comprises one or more heaters, and wherein a temperature-equalizing plate is disposed between the heaters and the die.

18. A die according to Claim 10, wherein the slit is formed between a pair of lip members, wherein the heating means comprises one or more heaters which are disposed on at least one of the lip members at the side opposite to the slit, and wherein the heaters are covered by a heat insulator at the exterior surface thereof.

19. A die according to Claim 10, wherein the heating means comprises emitting means which emits one of a visible ray and an infrared ray.

20. A die according to Claim 10, wherein the slit is formed between a pair of lip members, and wherein the heating means heats at least one of the lip members by directly applying current through there.

21. A die according to Claim 10, wherein the slit is formed between a pair of lip members, and wherein the heating means heats at least one of the lip members by high frequency induction heating.

22. A die according to Claim 10, wherein the slit is formed between a pair of lip members, and wherein at least one of the lip members has uniform thickness.

23. A die according to Claim 22, wherein the thickness variation of at least one of the lip members is within 10% of the average thickness thereof.

24. A die according to Claim 10, wherein the slit is formed between a pair of lip members, and the lip members are fixed to each other by a fixing member formed of the same material as the lip members.

25. A sheet manufacturing die comprising:

a slit from which a molten material is extruded in the form of a sheet;
a pair of lip members which form the slit between there; and
at least one pair of sealing members which are provided one on each end surface of at least one of the lip members in a slidable manner.

26. A die according to Claim 25, further comprising at least one pair of pressing members which are fixed one at each ends of at least one of the lip members and which press the sealing members.

27. A die according to Claim 25, wherein the sealing members receive a pressing force which satisfies the following condition:

$$\mu F < P < F$$

wherein $\mu$ is the coefficient of static friction of the sealing members relative to the lip member on which the sealing members are provided, F is the pressing force, and P is an internal pressure of the molten material.

28. A die according to Claim 25, wherein the sealing members are formed of a material such that the deformation thereof due to an internal pressure of the molten material is in an elastic region.

29. A die according to Claim 25, wherein the sealing members are formed of a material of which the coefficient of static friction relative to stainless steel is 0.2 or less.

30. A die according to Claim 10, wherein the slit is formed between a pair of lip members, wherein at least one of the opposing surfaces of the lip members has a uniform flatness in the width direction thereof, and wherein a manifold, which extends in the width direction, is formed between the lip members at the midsections thereof.

31. A die according to Claim 30, wherein only one of the lip members is provided with adjusting means which adjusts the size of the slit, and the surface of the other lip member at the side of the slit has a uniform flatness.

32. A die according to Claim 30, wherein the manifold is formed between a concavity formed in one of the lip members and the surface of the other lip member which has a uniform flatness.

33. A die according to Claim 30, wherein, in the middle region including at least 80% of the manifold in the width direction, the cross-section of the slit in a plane perpendicular to the width direction is 1/20 of the cross-section of the manifold or less, and the size of the slit is 1/4 of the length from the manifold to the tip of the lip members or less.

34. A die according to Claim 30, wherein the flatness of at least one of the opposing surfaces of the lip members is 20 $\mu$m or less in the width direction.

35. A die according to Claim 30, wherein the lip members are fixed to each other by fixing means including a plurality of point support members which are arranged approximately along the width direction, and

wherein the point support members are disposed at positions such that internal pressures of the molten material applied to the manifold at positions at which the point support members are disposed and moments applied to the lip members due to the internal pressures are balanced in the width direction.

36. A sheet manufacturing apparatus comprising:

a die according to one of Claims 10 and 25;
solidifying means which solidifies the molten material which is extruded from the die in the form of a sheet; and
winding means which winds the solidified sheet.

37. A method for manufacturing a sheet comprising the steps of:

supplying a molten material to a die according to one of Claims 10 and 25;
extruding the molten material from the slit formed in the die in the form of a sheet;
solidifying the sheet; and
winding the sheet.

38. A sheet which is manufactured by a manufacturing method according to Claim 1.

39. A sheet manufacturing method according to Claim 1, wherein, in the path of the molten material, an angle $\psi$ between a direction in which the middle portion of the molten material is extruded from the die and a direction in which the end portions of the molten material are extruded from the die is 20° or less.

40. A sheet manufacturing method according to Claim 39, wherein the angle $\psi$ is 10° or less.

41. A sheet manufacturing method according to Claim 1, wherein, the path along which the middle portion of the molten material moves from the die to the roller is disposed at the upper region relative to the paths along which the end portions of the molten material moves from the die to the roller.

42. A sheet manufacturing method according to Claim 1, wherein the molten material adheres to the roller by utilizing an electrostatic force.

43. A sheet manufacturing method according to Claim 42, wherein the distance between an electrode used for applying static electricity to the molten material and the molten material along the perpendicular line dropped from the electrode to the molten material is 3 mm or less.

FIG. 1C

FIG. 1D

FIG. 1A

FIG. 1B

WINDING DIRECTION

θ

EJECTING DIRECTION

FIG.2

FIG.3

FIG. 4A

FIG. 4B

FIG.5

FIG. 6B

FIG. 6A

30

FIG. 7A    FIG. 7B    FIG. 7C

FIG.8

FIG.9

FIG.10

FIG.12

FIG.11

FIG.13

FIG.14

FIG.16

FIG.15

EP 1 190 834 A2

FIG.17

FIG.18

FIG.19

FIG.20

FIG.21

FIG.22

FIG.23

EP 1 190 834 A2

FIG.25

FIG.24

FIG.27

FIG.26

FIG.28

FIG.29

FIG.30

$W\sin\theta = \mu W\cos\theta$

$\mu = W\sin\theta / W\cos\theta = \tan\theta$

FIG.31

EP 1 190 834 A2

FIG. 32A

70a

$L_0$

t

71a₁ → $71a_1$

71a₂

$L_1$  $d_1$  $L_2$

$L_a$

$dn \leqq t,$

$(Ln/dn) \geqq 0.1,$

$L0 < La < (1.2 \times L0) \dots (II)$

FIG. 32B

70b

$L_0$

t

71b₁
71b₂
71b₃

71b₄
71b₅
71b₆

$L_1$  $d_1$  $L_2$  $d_2$  $L_3$  $d_3$  $L_4$  $d_4$  $L_5$  $d_5$  $L_6$

$L_a$

d: SIZE OF GAP BETWEEN HEATERS

t: AVERAGE THICKNESS OF LIP MEMBER

L: LENGTH OF HEATER

L0: LENGTH OF LIP MEMBER

La: SUM OF LENGTH OF HEATERS AND GAPS

FIG. 32C

70c

$L_0$

t

71c₁
71c₂
71c₃

71c₄
71c₅
71c₆

$L_1$  $d_1$  $L_2$  $d_2$  $L_3$  $d_3$  $L_4$  $d_4$  $L_5$  $d_5$  $L_6$

$L_a$

FIG. 33A

PLANE P

34

16

35

16

FIG. 33B

16

34

35

16

PLANE S

PLANE P

34　　11　　35

19

14　15　12

101　201

FIG. 33C

EP 1 190 834 A2

90

92a    92b        92c        92d    92e

91a    91b        91c    91d        91e    91f

FIG.34

90

93

91a    91b    91c    91d    91e    91f

FIG.35

FIG. 36A

FIG. 36B

FIG.37    POSITION IN WIDTH DIRECTION (cm)

- ▲    PLANE INCLUDING EXTERIOR SURFACE
- ○    PLANE AT THE CENTER OF EXTERIOR SURFACE AND SURFACE FACING SECOND LIP
- ■    PLANE NEAR SURFACE FACING SECOND LIP

FIG.38    POSITION IN WIDTH DIRECTION (cm)

- ▲    PLANE INCLUDING EXTERIOR SURFACE
- ○    PLANE AT THE CENTER OF EXTERIOR SURFACE AND SURFACE FACING FIRST LIP
- ■    PLANE NEAR SURFACE FACING FIRST LIP

FIG.39

▲ PLANE INCLUDING EXTERIOR SURFACE
⊙ PLANE AT THE CENTER OF EXTERIOR SURFACE AND SURFACE FACING SECOND LIP
■ PLANE NEAR SURFACE FACING SECOND LIP

POSITION IN WIDTH DIRECTION (cm)

FIG.40

▲ PLANE INCLUDING EXTERIOR SURFACE
⊙ PLANE AT THE CENTER OF EXTERIOR SURFACE AND SURFACE FACING FIRST LIP
■ PLANE NEAR SURFACE FACING FIRST LIP

POSITION IN WIDTH DIRECTION (cm)

FIG.41

FIG.42

FIG.43

FIG.44

FIG.45

FIG.46

FIG.47

FIG.48

FIG.49